(19) Europäisches Patentamt
European Patent Office
Office européen des brevets

(11) **EP 3 657 372 A1**

(12) **EUROPEAN PATENT APPLICATION**
published in accordance with Art. 153(4) EPC

(43) Date of publication:
**27.05.2020 Bulletin 2020/22**

(51) Int Cl.:
**G06F 21/55** (2013.01)

(21) Application number: **17925578.1**

(22) Date of filing: **21.09.2017**

(86) International application number:
**PCT/JP2017/034167**

(87) International publication number:
**WO 2019/058489 (28.03.2019 Gazette 2019/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Mitsubishi Electric Corporation**
**Chiyoda-ku**
**Tokyo 100-8310 (JP)**

(72) Inventors:
• IJIRO, Hideaki
  **Tokyo 100-8310 (JP)**
• KAWAUCHI, Kiyoto
  **Tokyo 100-8310 (JP)**

(74) Representative: **Pfenning, Meinig & Partner mbB**
**Patent- und Rechtsanwälte**
**Theresienhöhe 11a**
**80339 München (DE)**

(54) **ALERT FREQUENCY CONTROL DEVICE AND ALERT FREQUENCY CONTROL PROGRAM**

(57) If an attack activity that belongs to any of a plurality of phases of a cyber-attack is detected, a calculation unit (120) calculates an occurrence interval of an attack scenario, using activity interval data. The activity interval data indicates each occurrence interval of one or more attack activities for each phase. The attack scenario is composed of one attack activity of a phase to which a detected attack activity belongs and one attack activity of each phase before the phase to which the detected attack activity belongs. A determination unit (130) determines necessity or non-necessity of an alert, based on the occurrence interval of the attack scenario.

Fig. 1

ALERT FREQUENCY CONTROL DEVICE (100)

PROCESSOR (901)
- MANAGEMENT UNIT (110)
- CALCULATION UNIT (120)
- DETERMINATION UNIT (130)
- NOTIFICATION UNIT (140)

MEMORY (902)
- STORAGE UNIT (191)

AUXILIARY STORAGE DEVICE (903)

COMMUNICATION DEVICE (904)
- RECEPTION UNIT (192)
- TRANSMISSION UNIT (193)

EP 3 657 372 A1

**Description**

**Technical Field**

The present invention relates to a technology for controlling frequency of alert related to occurrence of a series of attack activities.

**Background Art**

As a method for detecting a series of attack activities in a targeted attack, there exists a log analysis method based on an attack scenario. This method is applied mainly to security monitoring.

The attack scenario indicates a flow of attack activities in the series of attack activities.

The targeted attack is executed over a plurality of phases.

Therefore, many erroneous detections of the targeted attack occur if only an individual attack activity is analyzed.

On the other hand, it becomes possible to detect the series of attack activities that appears to be the targeted attack by monitoring the series of attack activities matching to the attack scenario.

Patent Literature 1 discloses a technology for reducing detection failure of a cyber-attack by analyzing logs along the attack scenario.

**Citation List**

**Patent Literature**

Patent Literature 1: JP2015-121968A

**Summary of Invention**

**Technical Problem**

It is possible to reduce detection failure of a series of attack activities that appears to be a targeted attack by the technology disclosed in Patent Literature 1. On the other hand, there is a possibility that the number of the series of attack activities to be detected will increase.

If the series of attack activities that appears to be the targeted attack is detected, an operator deals with the detected series of attack activities.

If the number of the series of attack activities to be detected increases, it becomes difficult for the operator to deal with them. As a result, there is a possibility that the targeted attack will be left unaddressed.

However, if the number of the series of attack activities to be detected is reduced too much for a purpose of enabling the operator to deal with them, the detection failure of the targeted attack increases.

It is an object of the present invention to control alert frequency to such an extent that each alert related to occurrence of the series of attack activities can be dealt with.

**Solution to Problem**

An alert frequency control device according to the present invention includes:

a calculation unit, if an attack activity that belongs to any of a plurality of phases of a cyber-attack is detected, to calculate an occurrence interval regarding an attack scenario composed of a representative attack activity of each phase, using activity interval data including each occurrence interval of one or more attack activities for each phase; and

a determination unit to determine whether or not an alert is necessary, based on the occurrence interval of the attack scenario.

**Advantageous Effects of Invention**

According to the present invention, it becomes possible to control alert frequency to such an extent that each alert related to occurrence of a series of attack activities can be dealt with.

Consequently, detection failure of a cyber-attack does not increase, and an unaddressed cyber-attack decreases.

**Brief Description of Drawings**

Fig. 1 is a configuration diagram of an alert frequency control device 100 according to Embodiment 1;
Fig. 2 is a diagram for explaining an attack scenario according to Embodiment 1;
Fig. 3 is a flowchart of an alert frequency control method according to Embodiment 1;
Fig. 4 is a flowchart of a receipt process (S110) according to Embodiment 1;
Fig. 5 is a diagram illustrating activity data 201 according to Embodiment 1;
Fig. 6 is a schematic diagram of a terminal file 210 according to Embodiment 1;
Fig. 7 is a diagram illustrating activity registration data 202 according to Embodiment 1;
Fig. 8 is a diagram illustrating activity interval data 220 according to Embodiment 1;
Fig. 9 is a flowchart of a calculation process (S120) according to Embodiment 1;
Fig. 10 is a diagram illustrating an attack activity list 230 according to Embodiment 1;
Fig. 11 is a flowchart of an activity interval calculation process (S122) according to Embodiment 1;
Fig. 12 is a flowchart of an update process (S123) according to Embodiment 1;
Fig. 13 is a flowchart of a scenario interval calculation process (S124) according to Embodiment 1;
Fig. 14 is a flowchart of a determination process (S130) according to Embodiment 1;
Fig. 15 is a flowchart of a determination result process (S140) according to Embodiment 1;
Fig. 16 is a diagram illustrating activity registration data 202 according to Embodiment 2;
Fig. 17 is a flowchart of a scenario interval calculation process (S124) according to Embodiment 2;
Fig. 18 is a schematic diagram of a terminal file 210 according to Embodiment 2;
Fig. 19 is a diagram illustrating activity registration data 202 according to Embodiment 3;
Fig. 20 is a flowchart of a registration process (S122) according to Embodiment 3;
Fig. 21 is a flowchart of a scenario interval calculation process (S124) according to Embodiment 3;
Fig. 22 is a schematic diagram of a terminal file 210 according to Embodiment 4;
Fig. 23 is a flowchart of an alert frequency control method according to Embodiment 4;
Fig. 24 is a flowchart of a scenario interval calculation process (S124) according to Embodiment 4;
Fig. 25 is a flowchart of a provisional interval update process (S1249) according to Embodiment 4;
Fig. 26 is a configuration diagram of an alert frequency control device 100 according to Embodiment 5;
Fig. 27 is a flowchart of an alert frequency control method according to Embodiment 5;
Fig. 28 is a flowchart of a decision process (S200) according to Embodiment 5;
Fig. 29 is a diagram for explaining first time and second time according to Embodiment 5;
Fig. 30 is a flowchart of an update process (S240) according to Embodiment 5;
Fig. 31 is a flowchart of the update process (S240) according to Embodiment 5;
Fig. 32 is a configuration diagram of an alert frequency control device 100 according to Embodiment 6;
Fig. 33 is a flowchart of an adjustment process (S300) according to Embodiment 6;
Fig. 34 is a hardware configuration diagram of an alert frequency control device 100 according to Embodiments.

**Description of Embodiments**

In embodiments and diagrams, the same or corresponding components are denoted by the same reference signs. Explanation of the components denoted by the same reference signs is omitted or simplified as appropriate. Arrows in the diagrams mainly indicate flows of data or processes.

Embodiment 1.

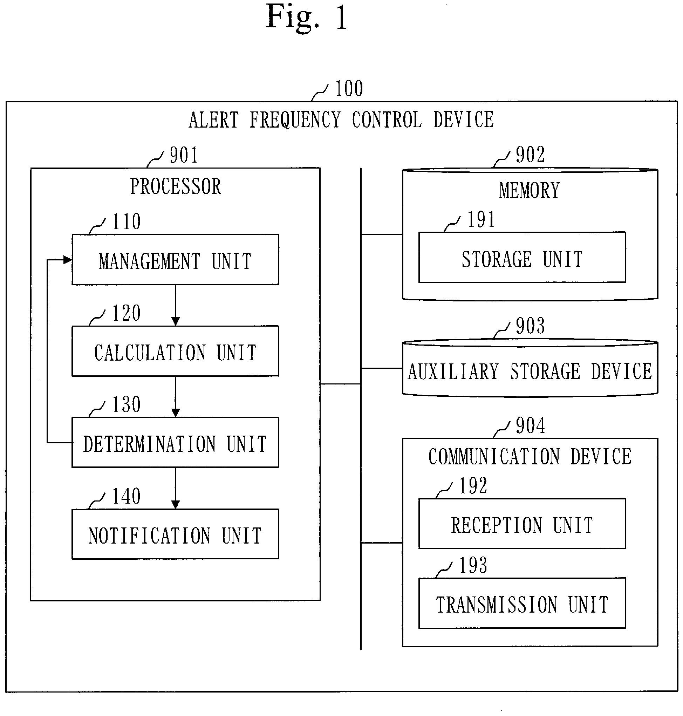

An embodiment for controlling frequency of alert related to occurrence of a series of attack activities will be explained based on Fig. 1 to Fig. 15.

*** Description of Configuration ***

A configuration of an alert frequency control device 100 will be explained based on Fig. 1.
The alert frequency control device 100 is a computer including hardware, such as a processor 901, a memory 902, an auxiliary storage device 903, and a communication device 904. These hardware components are connected with each other via signal lines.
The processor 901 is an integrated circuit (IC) that performs a calculation process, and controls other hardware components. For example, the processor 901 is a central processing unit (CPU), a digital signal processor (DSP), or a graphics processing unit (GPU).

The memory 902 is a volatile storage device. The memory 902 is also called a main storage device or a main memory. For example, the memory 902 is a random access memory (RAM). Data stored in the memory 902 is saved in the auxiliary storage device 903 as necessary.

The auxiliary storage device 903 is a nonvolatile storage device. For example, the auxiliary storage device 903 is a read-only memory (ROM), a hard disk drive (HDD), or a flash memory. Data stored in the auxiliary storage device 903 is loaded into the memory 902 as necessary.

The communication device 904 is a device that performs communication, that is, a receiver and a transmitter. For example, the communication device 904 is a communication chip or a network interface card (NIC).

The alert frequency control device 100 includes components, such as a management unit 110, a calculation unit 120, a determination unit 130, and a notification unit 140. These components are realized by software.

In the auxiliary storage device 903, an alert frequency control program for causing a computer to function as the management unit 110, the calculation unit 120, the determination unit 130, and the notification unit 140. The alert frequency control program is loaded into the memory 902, and executed by the processor 901.

In addition, an operating system (OS) is stored in the auxiliary storage device 903. At least a part of the OS is loaded into the memory 902, and executed by the processor 901.

That is, the processor 901 executes the alert frequency control program while executing the OS.

Data to be obtained by executing the alert frequency control program is stored in a storage device, such as the memory 902, the auxiliary storage device 903, a register in the processor 901, or a cache memory in the processor 901.

The memory 902 functions as a storage unit 191 to store data. However, other storage devices may function as the storage unit 191 in place of the memory 902 or together with the memory 902.

The communication device 904 functions as a reception unit 192 to receive data. Also, the communication device 904 functions as a transmission unit 193 to transmit data.

The alert frequency control device 100 may include a plurality of processors to replace the processor 901. The plurality of processors share a role of the processor 901.

The alert frequency control program can be recorded computer-readably in a nonvolatile recording medium, such as an optical disk or a flash memory.

The alert frequency control device 100 determines whether or not an alert is necessary, based on an occurrence interval of an occurred attack scenario.

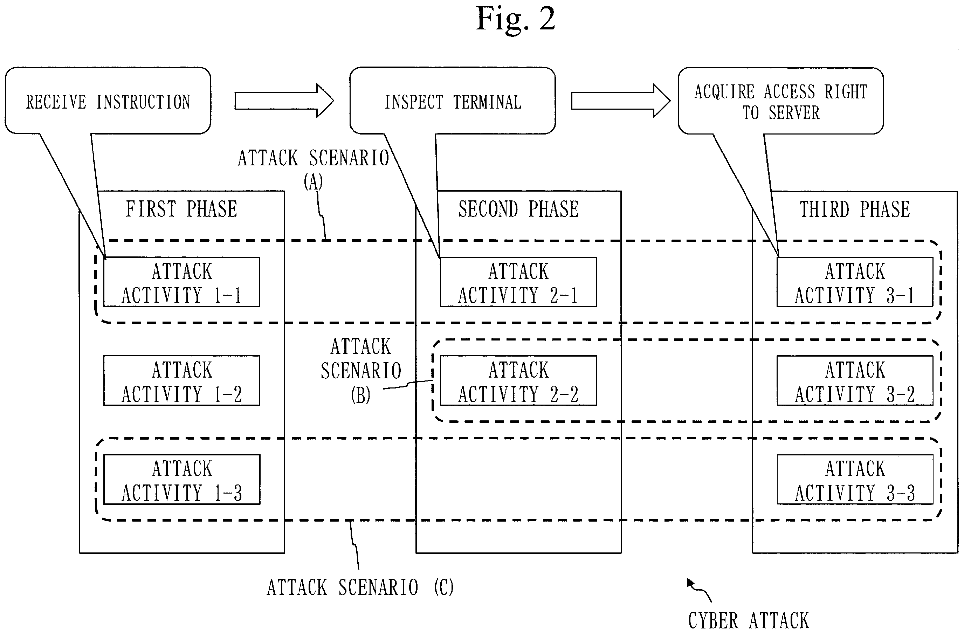

Based on Fig. 2, the attack scenario will be explained.

A cyber-attack consists of a plurality of phases, and the cyber-attack is performed by the plurality of phases. The phases mean stages in an attack process. A specific example of the cyber-attack is a targeted attack.

For example, the cyber-attack consists of phases from a first phase to a third phase. The first phase is a stage called an initial intrusion, a second phase is a stage called a base construction, and the third phase is a stage called an internal inspection.

However, it is not necessary that the phases from the first phase to the third phase are classified as above. That is, the phases from the first phase to the third phase may be classified by a different classification method, a more subdividing classification method, a classification method using a different name, or the like. Also, there is a case where the cyber-attack consists of a part of the phases from the first phase to the third phase. There is also a case where a fourth phase is or the fourth and further phases are included in the cyber-attack.

The attack scenario indicates a flow of attack activities in a series of attack activities that works as the cyber-attack.

Each of the attack activities belongs to any of the phases.

An attack scenario (A) consists of an attack activity 1-1, an attack activity 2-1, and an attack activity 3-1. The attack activity 1-1 is an attack activity of "receiving an instruction", and belongs to the first phase. When "receiving the instruction", malware that has infected a terminal receives an instruction from outside. The attack activity 2-1 is an attack activity of "inspecting a terminal", and belongs to the second phase. When "inspecting the terminal", the malware inspects data stored in the terminal. The attack activity 3-1 is an attack activity of "acquiring an access right to a server", and belongs to the third phase. When "acquiring the access right to the server", the malware acquires from the terminal, the right to access the server.

However, there is a case where the attack scenario consists of a part of the attack activities corresponding to a part of the phases from the first phase to the third phase. There is also a case where the attack activity that belongs to the fourth or later phase is included in the attack scenario.

For example, an attack scenario (B) consists of an attack activity 2-2 and an attack activity 3-2. The attack activity 2-2 belongs to the second phase, and the attack activity 3-2 belongs to the third phase. Also, an attack scenario (C) consists of an attack activity 1-3 and an attack activity 3-3. The attack activity 1-3 belongs to the first phase, and the attack activity 3-3 belongs to the third phase.

*** Description of Operation ***

Operation of the alert frequency control device 100 corresponds to an alert frequency control method. Also, a procedure of the alert frequency control method corresponds to a procedure of an alert frequency control program.

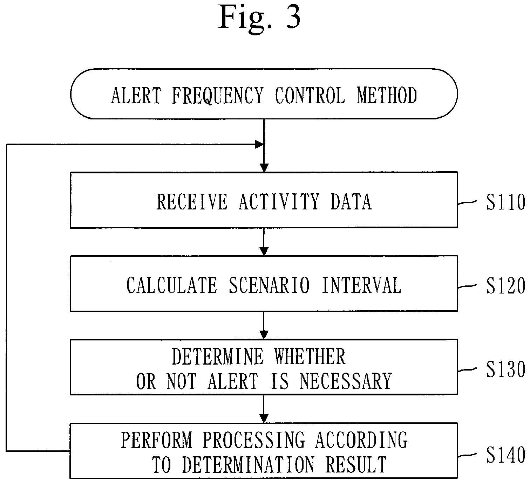

Based on Fig. 3, the alert frequency control method will be explained.

In step S110, the management unit 110 receives activity data.

The activity data is data including information on a detected attack activity.

A receipt process (S110) is executed every time the attack activity is detected and the activity data is inputted to the alert frequency control device 100.

Specifically, a network monitoring device detects the attack activity by a conventional monitoring method, and transmits the activity data of the detected attack activity to the alert frequency control device 100. Then, on the transmitted activity data reaching the alert frequency control device 100, the receipt process (S110) is executed.

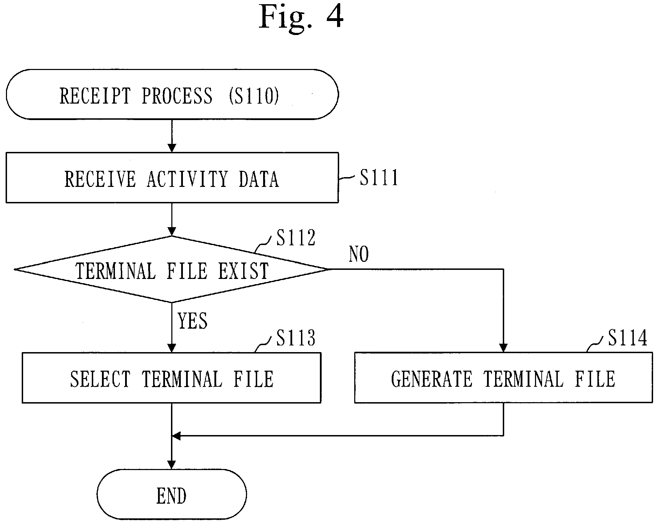

Based on Fig. 4, a procedure of the receipt process (S110) will be explained.

In step Sill, the reception unit 192 receives the activity data.

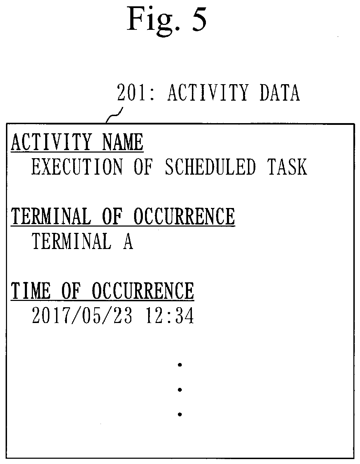

Based on Fig. 5, activity data 201 will be explained.

The activity data 201 includes information, such as an activity name, a terminal of occurrence, and time of occurrence.

The activity name identifies a category of the detected attack activity. The activity name indicated in the activity data 201 is "execution of a scheduled task".

The terminal of occurrence is a terminal in which the detected attack activity has occurred. The terminal of occurrence indicated in the activity data 201 is "terminal A".

The time of occurrence is time at which the detected attack activity has occurred. The time of occurrence indicated in the activity data 201 is "2017/05/23 12:34".

Returning to Fig. 4, explanation will be continued from step S112.

The terminal of occurrence in step S112 to step S114 means the terminal of occurrence that is indicated in the received activity data.

In step S112, the management unit 110 determines whether a terminal file for the terminal of occurrence is stored in the storage unit 191.

If the terminal file for the terminal of occurrence is stored in the storage unit 191, the process proceeds to step S113.

If the terminal file for the terminal of occurrence is not stored in the storage unit 191, the process proceeds to step S114.

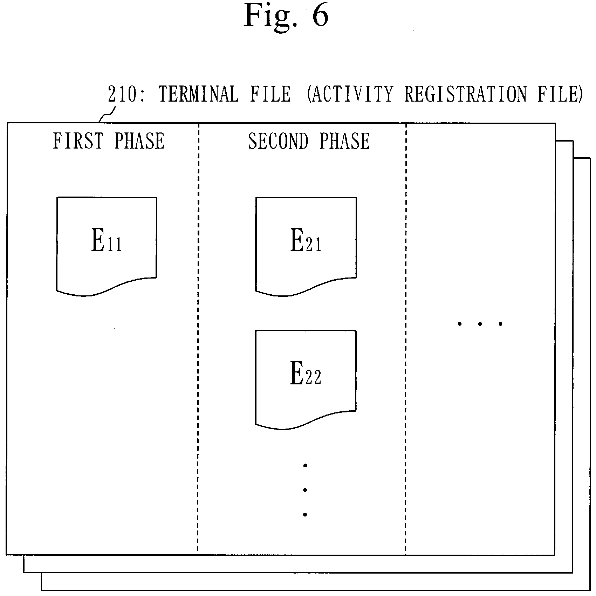

Based on Fig. 6, a terminal file 210 will be explained.

The terminal file 210 is an activity registration file that is created for each terminal, and is stored in the storage unit 191.

In the terminal file 210, for each phase, activity registration data of each attack activity belonging to such phase is registered. That is, for each category (activity name) of the attack activity, the activity registration data of the attack activity is registered in the terminal file 210, being associated with the phase to which the attack activity belongs. The activity registration data is generated based on information included in the activity data.

In Fig. 6, in the terminal file 210, activity registration data for each of an attack activity $E_{11}$, an attack activity $E_{12}$, and an attack activity $E_{22}$ is stored.

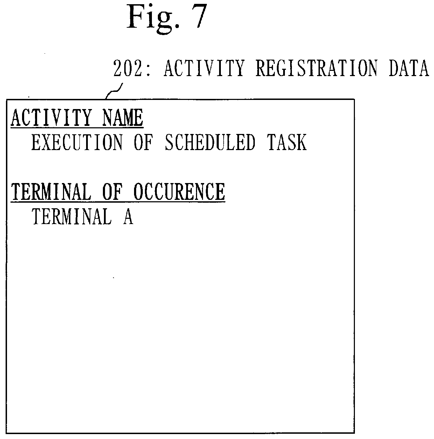

Based on Fig. 7, activity registration data 202 will be explained.

The activity registration data 202 indicates the activity name and the terminal of occurrence.

Returning to Fig. 4, explanation will be continued from step S113.

In step S113, the management unit 110 selects the terminal file for the terminal of occurrence from the storage unit 191.

In step S114, the management unit 110 generates a terminal file for the terminal of occurrence. Then, the storage unit 191 stores the terminal file for the terminal of occurrence.

Returning to Fig. 3, step S120 will be explained.

In the process in or after step S120, the detected attack activity is called a detected activity. Also, the activity data having been received in step S110 is called activity data of the detected activity.

In step S120, the calculation unit 120 calculates a scenario interval.

The scenario interval is an occurrence interval of the attack scenario. That is, the scenario interval is a period of time that indicates an interval at which the attack scenario occurs.

The attack scenario consists of a representative attack activity of each phase.

In Fig. 2, if any of the attack activities that belong to the third phase is detected, the occurrence interval of the attack scenario (A) is calculated, for example. The attack scenario (A) consists of the attack activity 1-1, the attack activity 2-1, and the attack activity 3-1. In the attack scenario (A), the attack activity 3-1 is an attack activity of the third phase to which the detected activity belongs. Also, the attack activity 2-1 is an attack activity of the second phase that is before the third phase, and the attack activity 1-1 is an attack activity of the first phase that is before the third phase.

Specifically, the calculation unit 120 calculates the scenario interval, using activity interval data.

The activity interval data is data that includes, for each phase, each occurrence interval of one or more attack activities. The activity interval data is stored in the storage unit 191.

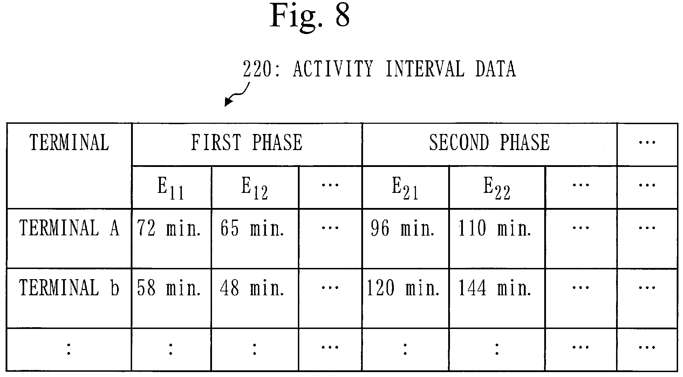

Based on Fig. 8, activity interval data 220 will be explained.

The activity interval data 220 includes an activity interval, number of times of occurrence, and time of previous occurrence, associating them with a pair of the terminal and the attack activity of each phase. In Fig. 8, a value indicated in the activity interval data 220 is the activity interval.

The activity interval is an occurrence interval of the attack activity. That is, the activity interval is a period of time that indicates an interval at which the attack activity occurs. Specifically, the activity interval is an average occurrence interval of the attack activity.

For example, an attack activity $E_{11}$ and an attack activity $E_{12}$ belong to the first phase. The occurrence interval of the attack activity $E_{11}$ in a terminal A is 72 minutes, and the occurrence interval of the attack activity $E_{12}$ in the terminal A is 65 minutes.

For example, an attack activity $E_{21}$ and an attack activity $E_{22}$ belong to the second phase, the occurrence interval of the attack activity $E_{21}$ in the terminal A is 96 minutes, and the occurrence interval of the attack activity $E_{22}$ in the terminal A is 110 minutes.

The number of times of occurrence is the number of times that the attack activity has occurred.

The time of previous occurrence is time at which the attack activity has occurred at a previous time.

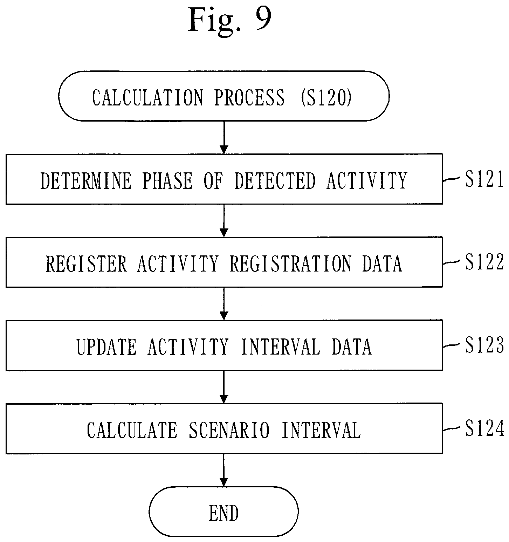

Based on Fig. 9, a procedure of a calculation process (S120) will be explained.

In step S121, the calculation unit 120 determines a phase of the detected activity.

The phase of the detected activity is a phase to which the detected activity belongs.

Specifically, the calculation unit 120 determines the phase of the detected activity, using an attack activity list.

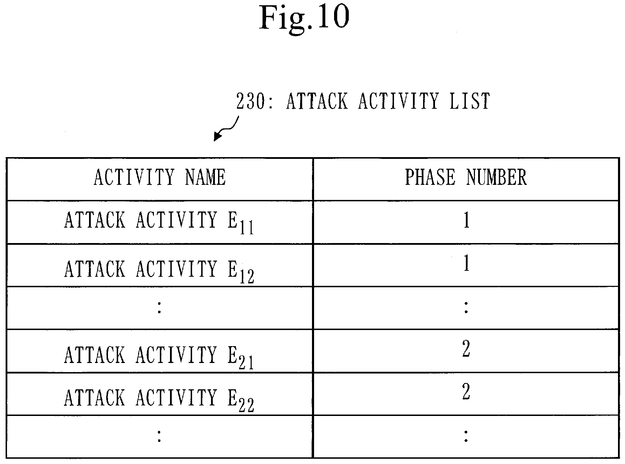

Based on Fig. 10, an attack activity list 230 will be explained.

The attack activity list 230 associates an activity name and a phase number with each other.

The activity name identifies the attack activity.

The phase number identifies the phase.

For example, an attack activity $E_{11}$ and an attack activity $E_{12}$ belong to the first phase, and an attack activity $E_{21}$ and an attack activity $E_{22}$ belong to the second phase.

Returning to Fig. 9, explanation of step S121 will be continued.

The calculation unit 120 determines the phase of the detected activity as below. First, the calculation unit 120 obtains the activity name from the activity data of the detected activity. The obtained activity name is called an activity name of the detected activity.

Next, the calculation unit 120 selects the same activity name as the activity name of the detected activity, from the attack activity list.

Then, the calculation unit 120 obtains the phase number associated with the selected activity name, from the attack activity list. The phase identified by the obtained phase number is the phase of the detected activity.

In step S122, if activity registration data of the attack activity of the same category as the detected activity of the detected activity is not registered in the terminal file for the terminal of occurrence, the calculation unit 120 registers activity registration data of the detected activity in the terminal file for the terminal of occurrence.

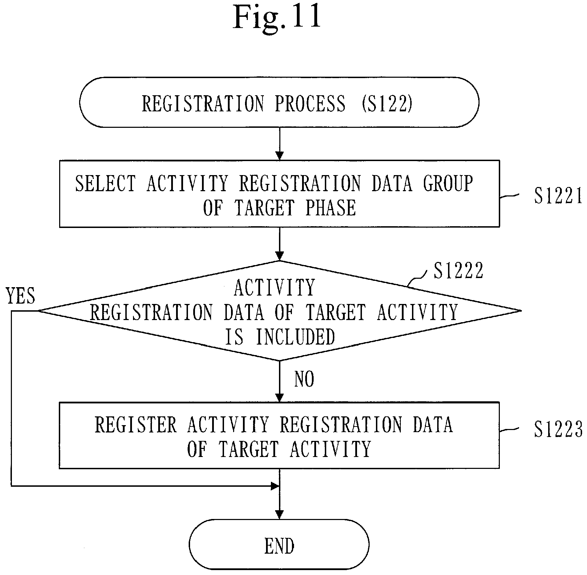

Based on Fig. 11, a procedure of a registration process (S122) will be explained.

In step S1221, the calculation unit 120 selects an activity registration data group associated with the phase of the detected activity, from the terminal file for the terminal of occurrence.

In Fig. 11, the phase of the detected activity is called a target phase, and the activity registration data group associated with the target phase is called an activity registration data group of the target phase.

The activity registration data group is one or more pieces of the activity registration data.

The terminal file for the terminal of occurrence is the terminal file selected in step S113 of Fig. 4 or the terminal file generated in step S114 of Fig. 4.

In step S1222, the calculation unit 120 determines whether the activity registration data of the attack activity of the same category as that of the detected activity is included in the activity registration data group of the target phase.

In Fig. 11, the attack activity of the same category as that of the detected activity is called a target activity.

If the activity registration data of the target activity is included in the activity registration data group of the target phase, the process ends.

If the activity registration data of the target activity is not included in the activity registration data group of the target phase, the process proceeds to step S1223.

In step S1223, the calculation unit 120 generates activity registration data of the target activity, using the activity data of the detected activity, and registers the activity registration data of the target activity in the terminal file for the terminal of occurrence, associating the activity registration data of the target activity with the target phase.

Returning to Fig. 9, explanation will be continued from step S123.

In step S123, the calculation unit 120 updates the activity interval data regarding the detected activity.

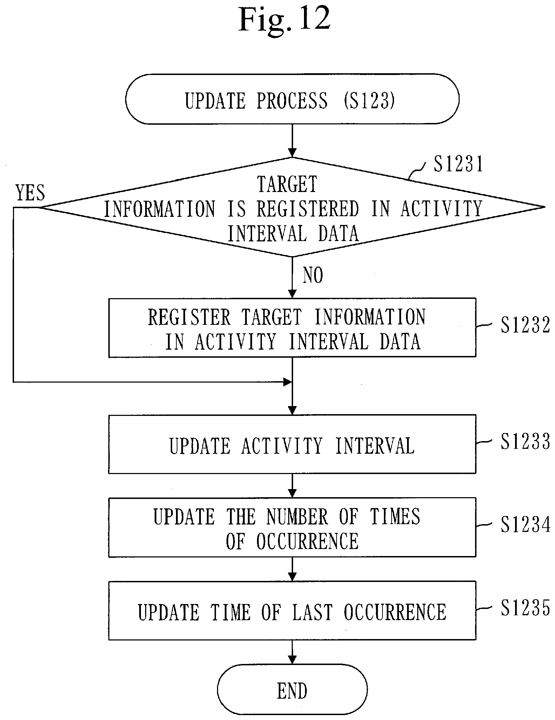

Based on Fig. 12, an update process (S123) will be explained.

In step S1231, the calculation unit 120 determines whether information associated with the terminal of occurrence and the target activity is registered in the activity interval data. The target activity is an attack activity of the same category as that of the detected activity.

In Fig. 12, the information associated with the terminal of occurrence and the target activity is called target information.

If the target information is registered in the activity interval data, the process proceeds to step S1233.

If the target information is not registered in the activity interval data, the process proceeds to step S1232.

In step S1232, the calculation unit 120 generates target information, and registers the target information in the activity interval data.

In the target information to be registered, the activity interval is zero, the number of times of occurrence is zero, and the time of previous occurrence is initial time. The initial time is time decided in advance.

In step S1233, the calculation unit 120 calculates a new activity interval, and updates the activity interval included in the target information to the new activity interval.

The new activity interval can be expressed in the following formula.

$$\text{New activity interval} = (\text{total activity period} + \text{passed time}) / (\text{number of times of occurrence} + 1)$$

$$\text{Total activity period} = \text{number of times of occurrence} \times \text{activity interval}$$

$$\text{Passed time} = \text{time of occurrence} - \text{time of previous occurrence}$$

The time of occurrence is time at which the detected attack activity has occurred, and is included in the activity data of the detected activity.

In step S1234, the calculation unit 120 updates the number of times of occurrence included in the target information. Specifically, the calculation unit 120 adds one to the number of times of occurrence included in the target information.

In step S1235, the calculation unit 120 updates the time of previous occurrence included in the target information to the time of occurrence of the detected activity. The time of occurrence of the detected activity is included in the activity data of the detected activity.

Returning to Fig. 9, explanation will be continued from step S124.

In step S124, the calculation unit 120 calculates the scenario interval, using the activity interval data.

Specifically, the calculation unit 120 selects a representative occurrence interval of each phase from the activity interval data. Then, the calculation unit 120 calculates a sum of the selected representative occurrence intervals. The sum that is calculated is the scenario interval.

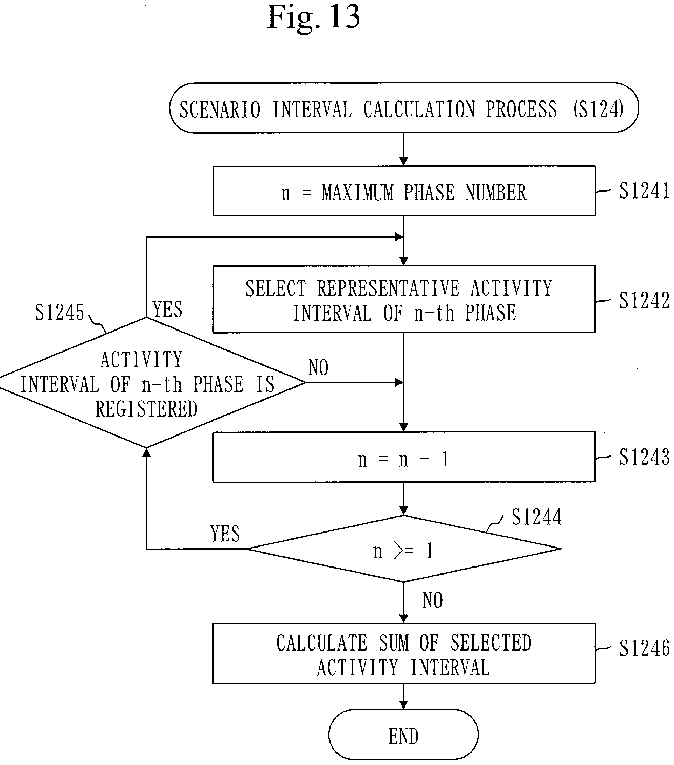

Based on Fig. 13, a procedure of a scenario interval calculation process (S124) will be explained.

In step S1241, the calculation unit 120 sets a maximum phase number in the activity interval data to a variable number n.

The maximum phase number in the activity interval data is a number that identifies the largest phase among phases with the activity interval registered in the activity interval data.

In Fig. 13, a value set to the variable number n is called a value of the variable number n.

In step S 1242, the calculation unit 120 selects a representative activity interval of an n-th phase from the activity interval data.

The n-th phase is a phase that is identified by the value of the variable number n.

Specifically, the calculation unit 120 selects the representative activity interval in the n-th phase as below.

First, the calculation unit 120 obtains the activity interval associated with each attack activity of the n-th phase from the activity interval data.

Then, the calculation unit 120 selects a longest activity interval from the obtained activity intervals. The longest activity interval that is selected is the representative activity interval in the n-th phase.

In step S1243, the calculation unit 120 subtracts one from the value of the variable number n.

In step S1244, the calculation unit 120 determines whether the value of the variable number n is one or more.

If the value of the variable number n is one or more, the process proceeds to step S1245.

If the value of the variable number n is less than one, the process proceeds to step S1246.

In step S1245, the calculation unit 120 determines whether the activity interval associated with the attack activity of the n-th phase is registered in the activity interval data.

If the activity interval associated with the attack activity of the n-th phase is registered in the activity interval data, the process proceeds to step S1242.

If the activity interval associated with the attack activity of the n-th phase is not registered in the activity interval data, the process proceeds to step S1243.

In step S1246, the calculation unit 120 calculates a sum of the representative activity intervals selected in step S1242. The sum that is calculated is the scenario interval.

Returning to Fig. 3, step S130 will be explained.

In step S130, the determination unit 130 determines whether or not an alert is necessary, based on the scenario interval.

Specifically, the determination unit 130 determines that the alert is necessary if the scenario interval is longer than a reference time.

The reference time is time decided in advance.

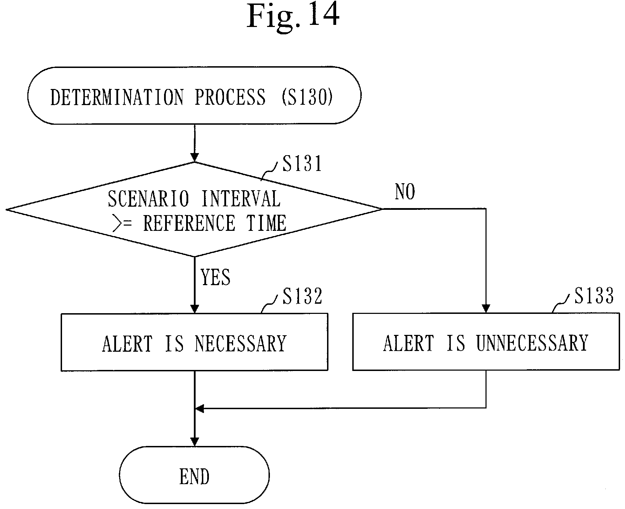

Based on Fig. 14, a procedure of a determination process (S130) will be explained.

In step S131, the determination unit 130 compares the scenario interval with the reference time.

If the scenario interval is equal to or longer than the reference time, the process proceeds to step S132.

If the scenario interval is shorter than the reference time, the process proceeds to step S133.

In step S132, the determination unit 130 determines that the alert is necessary.

In step S133, the determination unit 130 determines that the alert is unnecessary.

Returning to Fig. 3, step S140 will be explained.

In step S140, the management unit 110 and the notification unit 140 perform the process depending on a determination result. That is, the management unit 110 and the notification unit 140 perform the process depending on necessity or non-necessity of the alert.

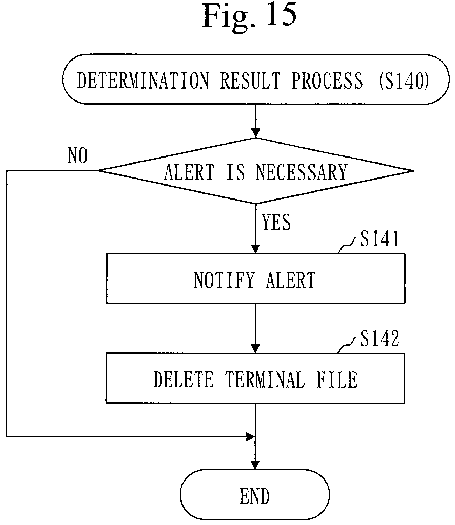

Based on Fig. 15, a procedure of a determination result process (S140) will be explained.

If it is determined that the alert is necessary in step S130, the process proceeds to step S141.

If it is determined that the alert is unnecessary in step S130, the process ends.

In step S141, the notification unit 140 notifies an operation center of the alert. For example, the notification unit 140 generates alert data including data of (1) or information of (2) below, or the like, and transmits the generated alert data to the operation center via the transmission unit 193:

> (1) the activity data received in step S110 of Fig. 3; or
> (2) information related to the attack scenario corresponding to the scenario interval calculated in step S120 of Fig. 3. The information related to the attack scenario is, for instance, an activity name of each attack activity that composes the attack scenario.

In step S142, the management unit 110 deletes the terminal file for the terminal of occurrence from the storage unit 191.

The terminal file for the terminal of occurrence is the terminal file selected in step S113 of Fig. 4 or the terminal file generated in step S114 of Fig. 4.

*** Supplement to Embodiment 1 ***

The scenario interval calculation process (S124) of Fig. 13 is based on a theory below.

It is difficult to identify a normal activity and an attack activity accurately. Therefore, there is a possibility that the normal activity is detected as the attack activity erroneously. If it is assumed that the erroneous detection occurs at random timings, an occurrence interval of the attack activity to be detected follows exponential distribution. In this case, time until each attack activity occurs next can be expressed by an average occurrence interval of the each attack activity.

In addition, if it is assumed that the each attack activity occurs according to independent exponential distribution, an interval at which the attack activity of each phase occurs in order of phases can be expressed by a sum of the average occurrence interval of the each attack activity because of memorylessness of the exponential distribution.

*** Effect of Embodiment 1 ***

It becomes possible to control alert frequency to such an extent that each alert related to occurrence of a series of attack activities can be dealt with.

Consequently, detection failure of a cyber-attack does not increase, and an unaddressed cyber-attack decreases.

*** Other Configuration ***

An occurrence interval such as an activity interval or a scenario interval corresponds to a reciprocal number of occurrence frequency. In other words, the occurrence frequency corresponds to a reciprocal number of the occurrence interval. The occurrence frequency is the number of times of occurrence per unit time. For example, the occurrence interval of ten minutes corresponds to the occurrence frequency of six times per hour.

Therefore, each occurrence interval may be converted to the occurrence frequency. In that case, reference frequency is used in place of the reference time. The reference frequency corresponds to a reciprocal number of the reference time.

Embodiment 2.

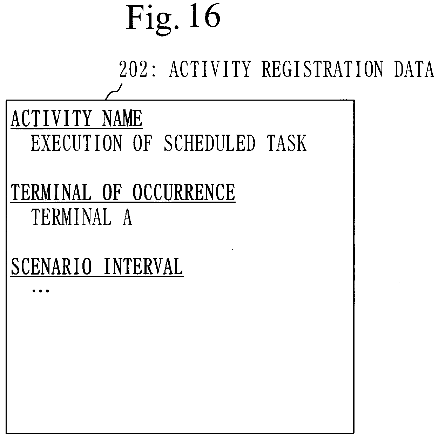

Regarding an embodiment in which a scenario interval is calculated about a combination in which an attack activity of each phase occurs in time-series order, mainly different points from Embodiment 1 will be explained based on Fig. 16 to Fig. 18.

*** Description of Configuration ***

A configuration of an alert frequency control device 100 is the same as the configuration in Embodiment 1 (see Fig. 1).

Based on Fig. 16, activity registration data 202 will be explained.

The activity registration data 202 includes a scenario interval.

*** Description of Operation ***

A procedure of an alert frequency control method is the same as the procedure in Embodiment 1 (see Fig. 3).

However, a part of the calculation process (S120) is different from the process in Embodiment 1. Specifically, in the calculation process (S120) of Fig. 9, the scenario interval calculation process (S124) is different from the process in Embodiment 1.

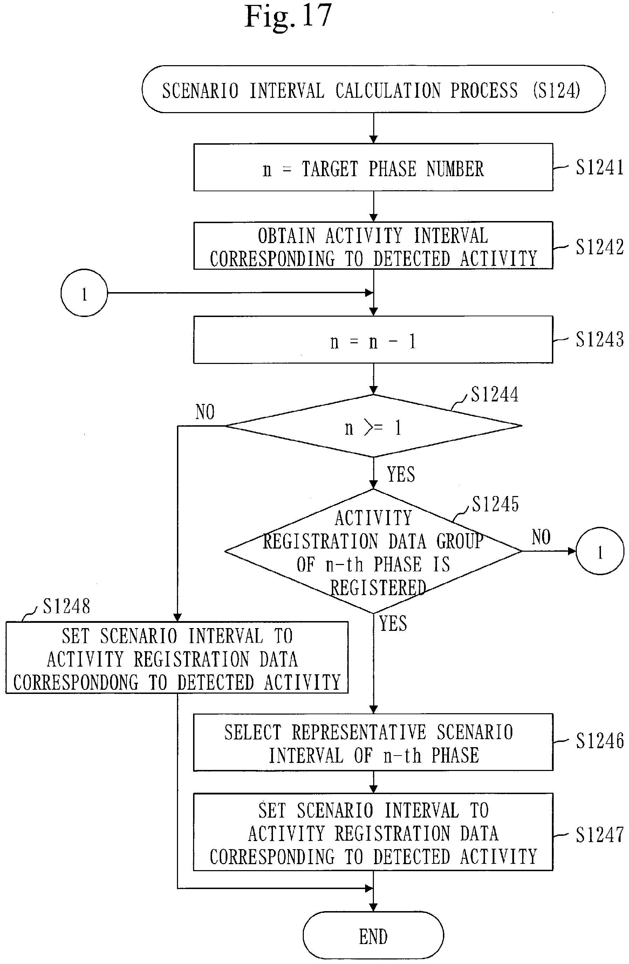

Based on Fig. 17, a procedure of the scenario interval calculation process (S124) will be explained.

In step S1241, the calculation unit 120 sets a number identifying the phase of the detected activity to the variable number n.

In Fig. 13, the number identifying the phase of the detected activity is called a target phase number. Also, a value set to the variable number n is called a value of the variable number n.

In step S1242, the calculation unit 120 obtains the activity interval corresponding to the detected activity from the activity interval data.

Specifically, the calculation unit 120 obtains the activity interval associated with a pair of the terminal of occurrence and the target activity, from the activity interval data. The target activity is the attack activity of the same category as that of the detected activity.

In step S1243, the calculation unit 120 subtracts one from the value of the variable number n.

In step S1244, the calculation unit 120 determines whether the value of the variable number n is one or more.

If the value of the variable number n is one or more, the process proceeds to step S1245.

If the value of the variable number n is less than one, the process proceeds to step S1248.

In step S 1245, the calculation unit 120 determines whether an activity registration data group of an n-th phase is registered in the terminal file for the terminal of occurrence. The n-th phase is a phase identified by the value of the variable number n. The activity registration data group is one or more pieces of activity registration data.

If the activity registration data group of the n-th phase is registered in the terminal file for the terminal of occurrence, the process proceeds to step S1246.

If the activity registration data group of the n-th phase is not registered in the terminal file for the terminal of occurrence, the process proceeds to step S1243.

In step S1246, the calculation unit 120 selects a representative scenario interval in the n-th phase from the activity registration data group of the n-th phase.

Specifically, the calculation unit 120 selects the representative scenario interval in the n-th phase as below.

First, the calculation unit 120 compares the scenario intervals of each activity registration data of the n-th phase.

Next, the calculation unit 120 selects representative activity registration data of the n-th phase. The representative activity registration data of the n-th phase is activity registration data to which a longest scenario interval in the activity registration data group of the n-th phase is set.

Then, the calculation unit 120 obtains the scenario interval from the representative activity registration data of the n-th phase. The scenario interval that is obtained is the representative scenario interval of the n-th phase.

In step S1247, the calculation unit 120 sets the scenario interval to activity registration data corresponding to the detected activity.

The activity registration data corresponding to the detected activity is activity registration data of the attack activity of the same category as that of the detected activity.

Specifically, the calculation unit 120 operates as below.

First, the calculation unit 120 calculates a sum of the activity interval obtained in step S1242 and the representative scenario interval selected in step S1246. The sum that is calculated is called a total interval.

Next, the calculation unit 120 selects the activity registration data corresponding to the detected activity from the terminal file for the terminal of occurrence.

Then, the calculation unit 120 sets the total interval as the scenario interval to the activity registration data corresponding to the detected activity.

If the scenario interval has already been set in the activity registration data corresponding to the detected activity, the calculation unit 120 updates a value of the scenario interval to the total interval.

In step S1248, the calculation unit 120 sets the scenario interval to the activity registration data corresponding to the detected activity.

The activity registration data corresponding to the detected activity is activity registration data of the attack activity of the same category as that of the detected activity.

Specifically, the calculation unit 120 operates as below.

First, the calculation unit 120 selects the activity registration data corresponding to the detected activity from the terminal file for the terminal of occurrence.

Then, the calculation unit 120 sets, as the scenario interval, the activity interval corresponding to the detected activity (obtained in step S1242) to the activity registration data corresponding to the detected activity.

The scenario interval set to the activity registration data corresponding to the detected activity in step S1247 or step S1248 is the scenario interval calculated in the scenario interval calculation process (S124).

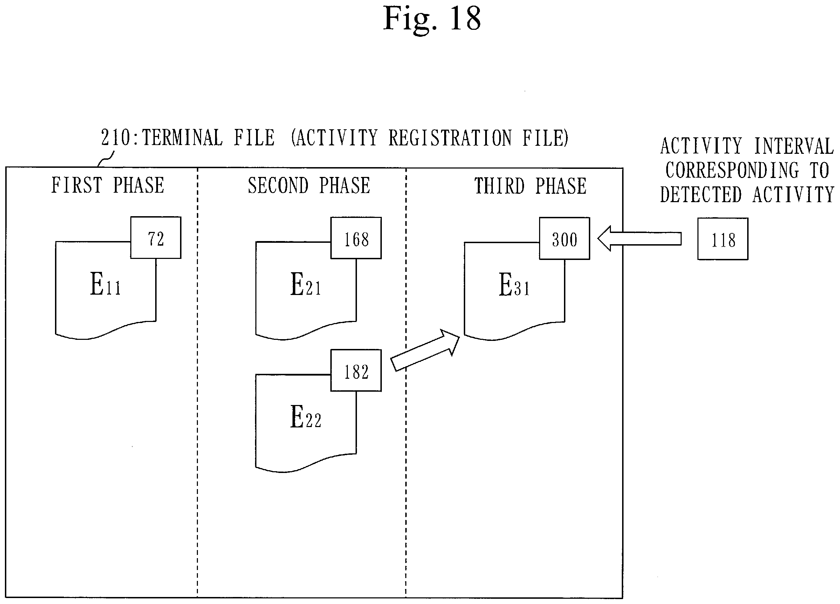

Based on Fig. 18, an outline of the scenario interval will be explained.

A phase of a detected activity ($E_{31}$) is a third phase. Also, a value of an activity interval corresponding to the detected activity ($E_{31}$) is 118.

In a second phase, a value of an activity interval of an attack activity $E_{21}$ is 168, and a value of an activity interval of an attack activity $E_{22}$ is 182. Therefore, the value of the representative activity interval in the second phase is 182 (> 168).

In this case, 300 (= 118 + 182) is set to the activity registration data corresponding to the detected activity ($E_{31}$), as a value of the scenario interval.

\*\*\* Supplement to Embodiment 2 \*\*\*

Selecting the longest activity interval (representative activity interval) in the n-th phase is equivalent to selecting a combination of the attack activities with the longest occurrence intervals from combinations of the attack activities of each phase up to the n-th phase. Ascending order of the phase number n corresponds to time-series order, and the attack activity of each phase of the selected combination is supposed to have occurred in the order of the phase number n.

\*\*\* Effect of Embodiment 2 \*\*\*

It is possible to calculate a scenario interval about a combination in which an attack activity of each phase occurs in time-series order.

Embodiment 3.

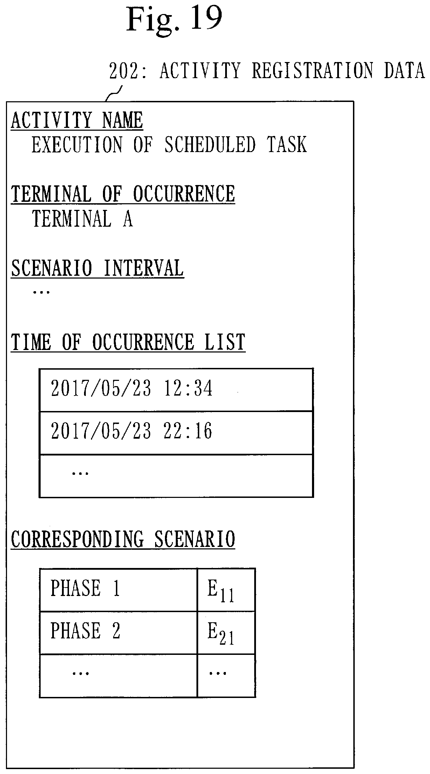

Regarding an embodiment that enables providing an operator with information when notifying of an alert, mainly different points from Embodiment 2 will be explained based on Fig. 19 to Fig. 21.

\*\*\* Description of Configuration \*\*\*

A configuration of an alert frequency control device 100 is the same as the configuration in Embodiment 1 (see Fig. 1).

Based on Fig. 19, activity registration data 202 will be explained.

The activity registration data 202 includes information, such as an occurrence time list and a corresponding scenario.

The occurrence time list is a list of occurrence time of a target activity, that is, a list of time at which the target activity has occurred after generation of a terminal file. The target activity is an attack activity that is identified by an activity name included in the activity registration data 202.

The corresponding scenario indicates the activity name of the attack activity of each phase in the scenario corresponding to a scenario interval.

A scenario interval is an interval at which the corresponding scenario occurs.

\*\*\* Description of Operation \*\*\*

A procedure of an alert frequency control method is the same as the procedure in Embodiment 1 (see Fig. 3).

However, a part of the calculation process (S120) is different from the process in Embodiment 1. Specifically, in the calculation process (S120) of Fig. 9, the registration process (S122) and the scenario interval calculation process (S124) are different from the processes in Embodiment 1.

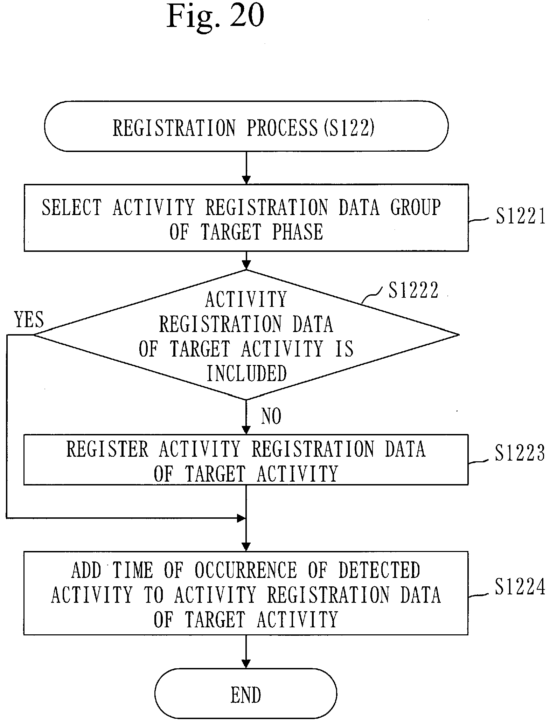

Based on Fig. 20, the registration process (S122) will be explained.

Step S1221 to step S1223 are as explained in Embodiment 1 (see Fig. 11).

After step S1223, the process proceeds to step S1224.

In step S1224, the calculation unit 120 adds time of occurrence of the detected activity to the activity registration data of the target activity.

Specifically, the calculation unit 120 obtains the time of occurrence from the activity data of the detected activity. The time of occurrence that is obtained is the time of occurrence of the detected activity. Then, the calculation unit 120 adds the time of occurrence of the detected activity to the occurrence time list in the activity registration data of the target activity.

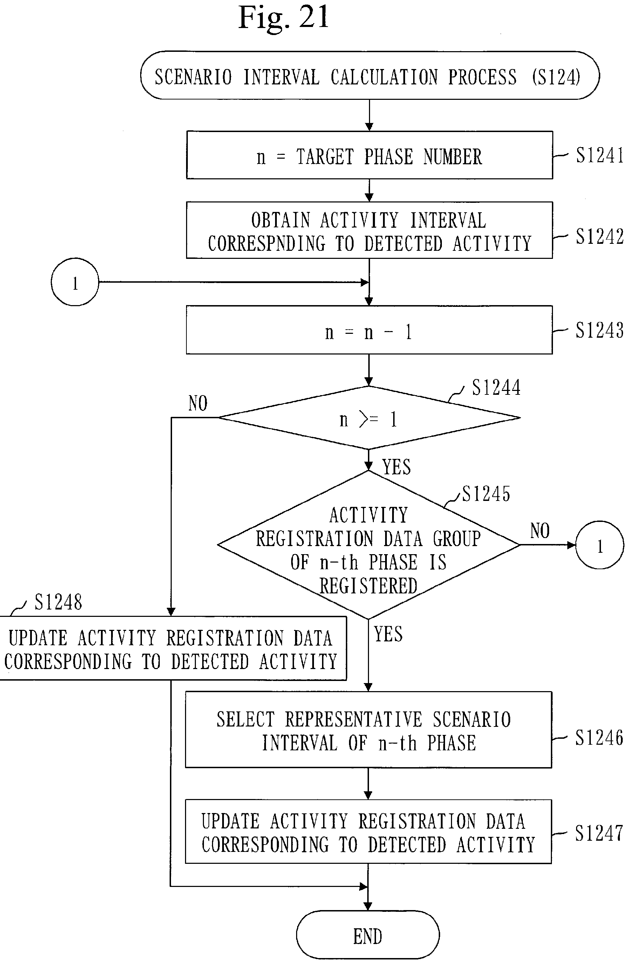

Based on Fig. 21, the scenario interval calculation process (S124) will be explained.

Step S1241 to step 1246 are the same as the process in Embodiment 2 (Fig. 17).

Step S1247 and step S1248 are partially different from the process in Embodiment 2 (Fig. 17).

In step S1247, the calculation unit 120 updates the activity registration data corresponding to the detected activity.

The activity registration data corresponding to the detected activity is activity registration data of the attack activity of the same category as that of the detected activity.

Specifically, the calculation unit 120 sets the scenario interval to the activity registration data corresponding to the detected activity. This process is the same as step S1247 in Embodiment 2 (Fig. 17). The set scenario interval is the scenario interval calculated in the scenario interval calculation process (S124).

In addition, the calculation unit 120 updates the corresponding scenario included in the activity registration data corresponding to the detected activity as below.

First, the calculation unit 120 obtains the corresponding scenario from the representative activity registration data in the n-th phase. The corresponding scenario that is obtained is called a representative scenario.

The representative activity registration data in the n-th phase is activity registration data to which the representative scenario interval in the n-th phase is set (see step S1246).

Next, the calculation unit 120 sets the representative scenario to the activity registration data corresponding to the detected activity as the corresponding scenario.

If the corresponding scenario has been already set to the activity registration data corresponding to the detected activity, the calculation unit 120 sets the representative scenario as the corresponding scenario after deleting the corresponding scenario that has been set.

Then, the calculation unit 120 adds a field of the phase of the detected activity to the corresponding scenario in the activity registration data corresponding to the detected activity, and sets the activity name of the detected activity in the added field.

In step S1248, the calculation unit 120 updates the activity registration data corresponding to the detected activity.

The activity registration data corresponding to the detected activity is activity registration data of the attack activity of the same category as that of the detected activity.

Specifically, the calculation unit 120 sets the scenario interval to the activity registration data corresponding to the detected activity. This process is the same as step S1248 in Embodiment 2 (Fig. 17). The set scenario interval is the scenario interval calculated in the scenario interval calculation process (S124).

In addition, the calculation unit 120 adds, as the corresponding scenario, a field of the phase of the detected activity to the activity registration data corresponding to the detected activity, and sets the activity name of the detected activity to the added field.

*** Supplement to Embodiment 3 ***

In step S141 (see Fig. 15), the notification unit 140 obtains information, such as the occurrence time list and the corresponding scenario, from the activity registration data corresponding to the detected activity, and notifies of the obtained information, including the obtained information in the alert.

*** Effect of Embodiment 3 ***

Notifying an operator of the occurrence time list and the corresponding scenario has an effect of speeding up response of the operator. The information to be notified may be either one of the occurrence time list or the corresponding scenario.

Embodiment 4.

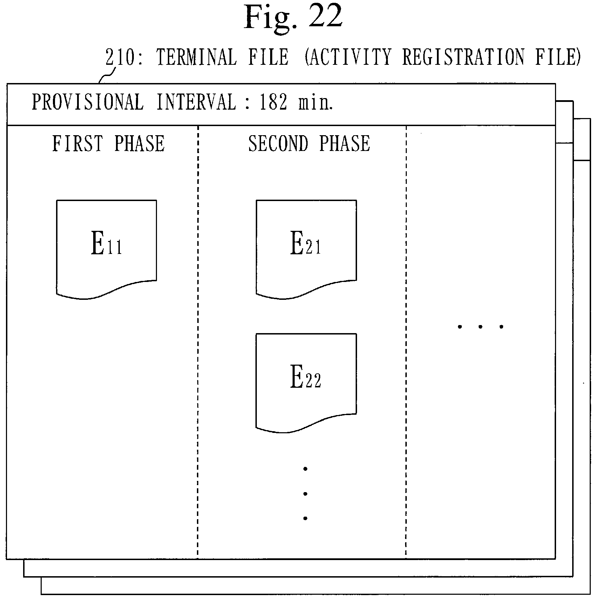

Regarding an embodiment that reduces the number of times of the determination process (S130), mainly different points from Embodiment 3 will be explained based on Fig. 22 to Fig. 25.

*** Description of Configuration ***

A configuration of an alert frequency control device 100 is the same as of the configuration in Embodiment 1 (see Fig. 1).

Based on Fig. 22, a terminal file 210 will be explained.

The terminal file 210 includes a provisional interval.

The provisional interval is a provisional scenario interval.

*** Description of Operation ***

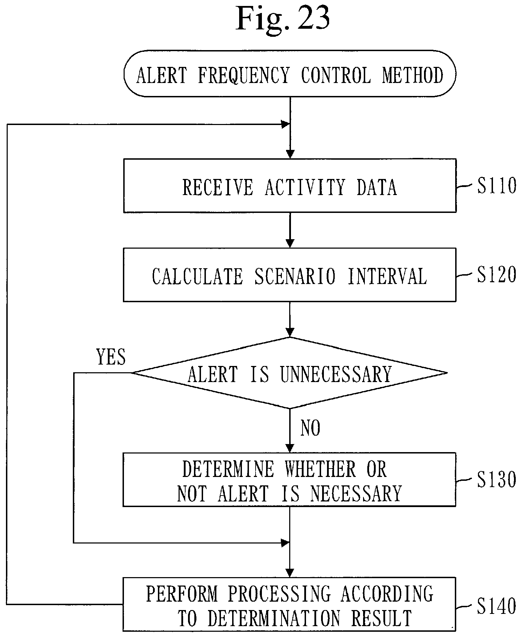

Based on Fig. 23, an alert frequency control method will be explained.

If it is determined that an alert is unnecessary in step S120, the process proceeds to step S140.

If it is not determined that the alert is unnecessary in step S120, the process proceeds to step S130.

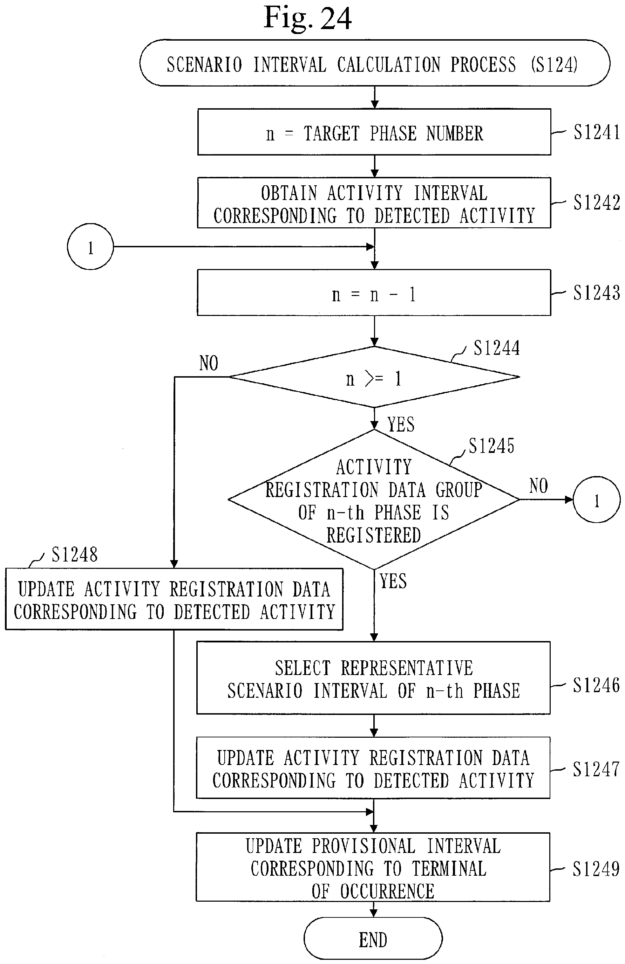

Based on Fig. 24, a scenario interval calculation process (S124) will be explained.

Step S1241 to step S1248 are the same as the process in Embodiment 3 (Fig. 21).

In step S1249, the calculation unit 120 updates the provisional interval corresponding to the terminal of occurrence.

The provisional interval corresponding to the terminal of occurrence is a provisional interval registered in the terminal file for the terminal of occurrence.

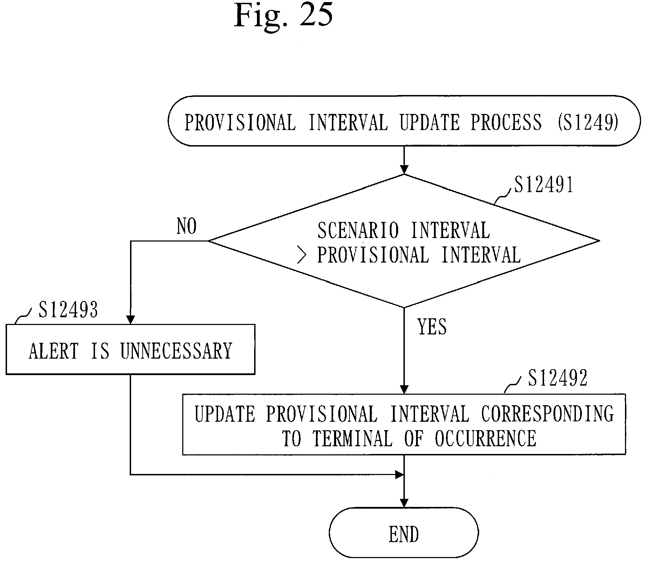

Based on Fig. 25, a provisional interval update process (S1249) will be explained.

In the provisional interval update process (S1249), the scenario interval set to the activity registration data corresponding to the detected activity in step S1247 or step S1248 is called a scenario interval corresponding to the detected activity.

The scenario interval corresponding to the detected activity is the scenario interval calculated in the scenario interval calculation process (S124).

In step S12491, the calculation unit 120 compares the scenario interval corresponding to the detected activity with the provisional interval corresponding to the terminal of occurrence.

If the scenario interval is larger than the provisional interval, the process proceeds to step S12492.

If the scenario interval is equal to or smaller than the provisional interval, the process proceeds to step S12493.

In step S12492, the calculation unit 120 updates the provisional interval corresponding to the terminal of occurrence to the scenario interval corresponding to the detected activity.

In step S12493, the calculation unit 120 determines that the alert is unnecessary.

*** Effect of Embodiment 4 ***

The determination process (S130) is executed only if the provisional interval corresponding to the terminal of occurrence is updated. Thereby, it is possible to reduce the number of times of the determination process (S130). Then, it becomes possible to reduce calculation resources.

Note that Embodiment 4 may be applied to Embodiment 1 or Embodiment 2.

Embodiment 5.

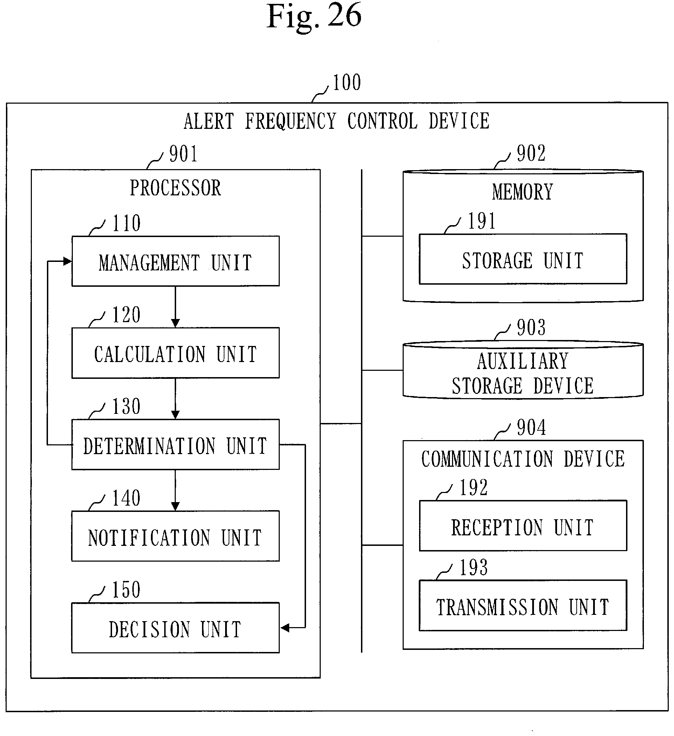

Regarding an embodiment in which reference time is decided, mainly different points from Embodiment 1 will be explained based on Fig. 26 to Fig. 31.

*** Description of Configuration ***

Based on Fig. 26, a configuration of an alert frequency control device 100 will be explained.

The alert frequency control device 100 further includes a decision unit 150.

The alert frequency control program further causes a computer to function as the decision unit 150.

*** Description of Operation ***

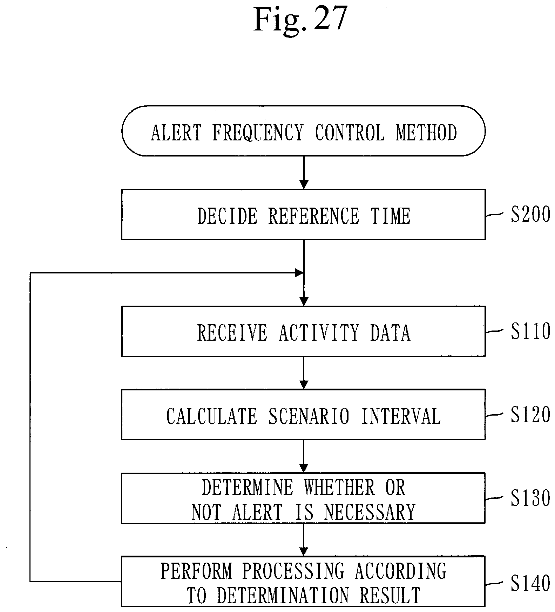

Based on Fig. 27, an alert frequency control method will be explained.

In step S200, the decision unit 150 decides reference time.

Step S200 is performed as preprocessing for deciding the reference time in the alert frequency control method.

For example, step S200 is performed during a test period before starting operation of the alert frequency control device 100.

In step S200, a plurality of pieces of simulated activity data are used. However, data to be used is not limited to simulated data. That is, actual data may be used. For example, it becomes possible to use the actual data by copying the actual data from an existing device to the alert frequency control device 100.

The reference time is decided as below.

The calculation unit 120 calculates each temporary occurrence interval of one or more attack scenarios. The temporary occurrence interval is the occurrence interval calculated in step S200, that is, the occurrence interval calculated before the reference time is decided.

If each temporary occurrence interval is longer than provisional time, the determination unit 130 determines that an alert is necessary. The provisional time is time that corresponds to the reference time.

Then the decision unit 150 measures, as estimated frequency, frequency at which it has been determined that the alert is necessary, and decides the reference time based on the estimated frequency.

Specifically, the reference time is decided as below.

If the estimated frequency satisfies an update suspension condition, the decision unit 150 decides the provisional time to be the reference time. The update suspension condition is a condition decided in advance as a condition on which update of the provisional time is suspended.

If the estimated frequency does not satisfy the update suspension condition, the decision unit 150 updates the provisional time.

After the provisional time is updated, the calculation unit 120 calculates one or more new temporary occurrence intervals.

If each new temporary occurrence interval is longer than the provisional time after update, the determination unit 130 determines that the alert is necessary.

The decision unit 150 measures, as new estimated frequency, frequency at which it has been determined that the alert is necessary after the provisional time is updated.

And, if the new estimated frequency satisfies the update suspension condition, the decision unit 150 decides the provisional time after update to be the reference time.

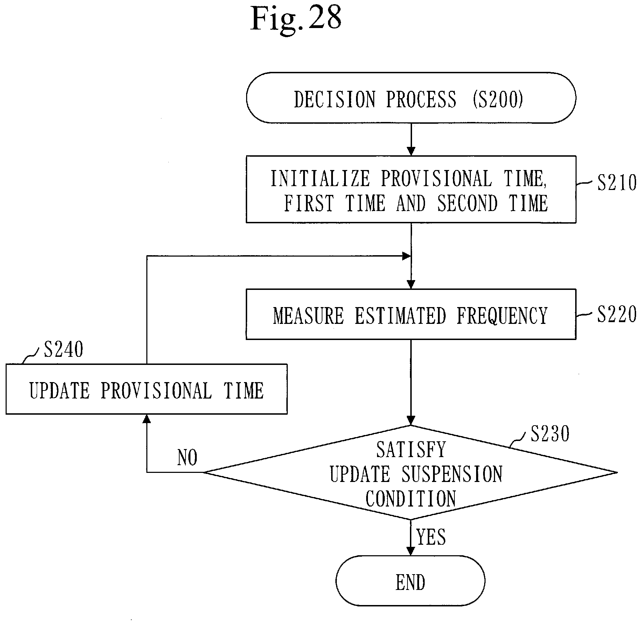

Based on Fig. 28, details of the decision process (S200) will be explained.

In step S210, the decision unit 150 initializes the provisional time, first time, and second time.

The first time and the second time will be explained below.

The first time is the longest past provisional time of past provisional time shorter than the present provisional time. That is, the first time is the past provisional time that is shorter than the present provisional time and the closest in length to the present provisional time.

The second time is the shortest past provisional time of past provisional time longer than the present provisional time. That is, the second time is past provisional time that is longer than the present provisional time and the closest in length to the present provisional time.

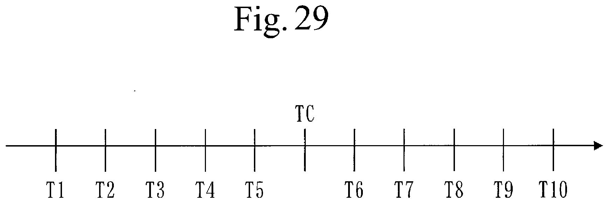

Based on Fig. 29, the first time and the second time will be explained.

The provisional time TC is the present provisional time. The provisional time T1 to the provisional time T10 are the past provisional time.

The first time is the provisional time T5 that is the longest among the provisional time T1 to the provisional time T5 that are shorter than the provisional time TC.

The second time is the provisional time T6 that is the shortest among the provisional time T6 to the provisional time T10 that are longer than the provisional time TC.

Returning to Fig. 28, explanation of the step S210 will be continued.

Specifically, the decision unit 150 sets an initial value to each of the provisional time, the first time, and the second time.

For example, the decision unit 150 sets one to the provisional time, zero to the first time, and infinity to the second time.

In step S220, the decision unit 150 measures the estimated frequency. Specifically, simulated each activity data is inputted in the alert frequency control device 100 during measurement time decided in advance. Then, the management unit 110, the calculation unit 120, and the determination unit 130 performs a process for the simulated each activity data. The process is the same as the process for each actual activity data (S110 to S140).

The occurrence interval calculated by the calculation unit 120 in step S220 is called a temporary occurrence interval. If each temporary occurrence interval is longer than the provisional time, the determination unit 130 determines that the alert is necessary.

The decision unit 150 measures frequency at which it has been determined that the alert is necessary. The frequency that is measured is estimated frequency.

Specifically, the decision unit 150 counts the number of times of the alert at which it has been determined that the alert is necessary, and divides the number of times of the alert by a value obtained by dividing the measurement time by unit time. A value obtained as a result is the estimated frequency.

In step S230, the decision unit 150 determines whether the estimated frequency satisfies the update suspension condition.

Specifically, the update suspension condition can be expressed in the following formula.

$$0 < (\lambda_E - \lambda_S) < (0.05 \times \lambda_S)$$

$\lambda_E$ is the estimated frequency.

$\lambda_S$ is reference frequency. The reference frequency is frequency decided in advance. Specifically, the reference frequency is alert frequency at which it is possible to deal with each alert at an operation center.

That is, the decision unit 150 determines whether the estimated frequency is larger than the reference frequency and 1.05 times smaller than the reference frequency.

If the estimated frequency is larger than the reference frequency and 1.05 times smaller than the reference frequency, the estimated frequency satisfies the update suspension condition.

If the estimated frequency satisfies the update suspension condition, the process ends. The provisional time at this time becomes the reference time.

If the estimated frequency does not satisfy the update suspension condition, the process proceeds to step S240.

In step S240, the decision unit 150 updates the provisional time.

Specifically, the provisional time is updated as below.

If the estimated frequency is equal to or smaller than the reference frequency, the decision unit 150 shortens the provisional time.

If the estimated frequency is equal to or 1.05 times larger than the reference frequency, the decision unit 150 extends the provisional time.

After step S240, the process proceeds to step S220.

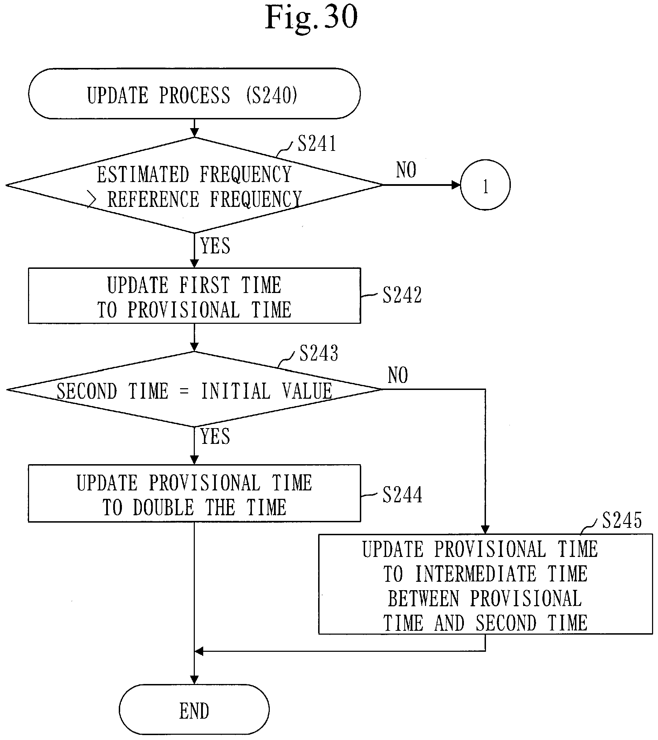

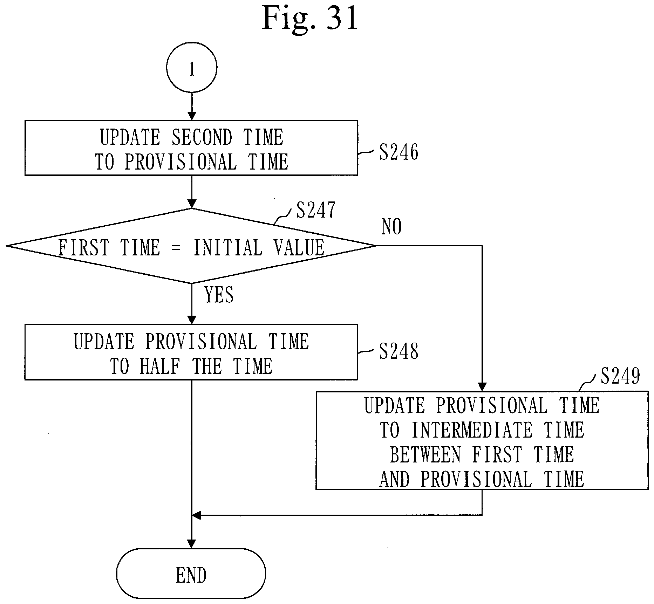

Based on Fig. 30 and Fig. 31, a procedure of the update process (S240) will be explained.

In step S241 (see Fig. 30), the decision unit 150 compares the estimated frequency with the reference frequency.

If the estimated frequency is larger than the reference frequency, the process proceeds to step S242.

If the estimated frequency is equal to or smaller than the reference frequency, the process proceeds to step S246 (see Fig. 31).

In step S242, the decision unit 150 updates the first time to the provisional time.

Step S242 can be expressed in the following formula.

$$Smax = Tp$$

Tp is the provisional time.
Smax is the first time.

In step S243, the decision unit 150 determines whether the second time is an initial value for the second time (infinity).
If the second time is the initial value for the second time (infinity), the process proceeds to step S244.
If the second time is not the initial value for the second time (infinity), the process proceeds to step S245.
In step S244, the decision unit 150 updates the provisional time to double the time.
Step S244 can be expressed in the following formula.

$$Tp = 2Tp$$

Tp is the provisional time.
In step S245, the decision unit 150 updates the provisional time to intermediate time between the provisional time and the second time.
Step S245 can be expressed in the following formula.

$$Tp = (Lmin + Tp) / 2$$

Tp is the provisional time.
Lmin is the second time.

In step S246 (see Fig. 31), the decision unit 150 updates the second time to the provisional time.
Step S246 can be expressed in the following formula.

$$Lmin = Tp$$

Tp is the provisional time.
Lmin is the second time.

In step S247, the decision unit 150 determines whether the first time is an initial value for the first time (infinity).
If the first time is the initial value for the first time (infinity), the process proceeds to step S248.
If the first time is not the initial value of the first time (infinity), the process proceeds to step S249.
In step S248, the decision unit 150 updates the provisional time to half the time.
Step S248 can be expressed in the following formula.

$$Tp = Tp / 2$$

Tp is the provisional time.
In step S249, the decision unit 150 updates the provisional time to intermediate time between the first time and the provisional time.
Step S249 can be expressed in the following formula.

$$Tp = (Smax + Tp) / 2$$

Tp is the provisional time.
Smax is the first time.

Returning to Fig. 27, the process after step S200 will be explained.

After step S200, step S110 to step S140 are executed.

Step S110 to step S140 are as explained in Embodiment 1 (see Fig. 3). In step S130, the reference time decided in step S200 is used.

*** Effect of Embodiment 5 ***

It is possible to automatically decide reference time suitable for Embodiment 1.

As a result, it becomes possible to control alert frequency more appropriately. Therefore, detection failure of a cyber-attack does not increase, and an unaddressed cyber-attack decreases.

Embodiment 6

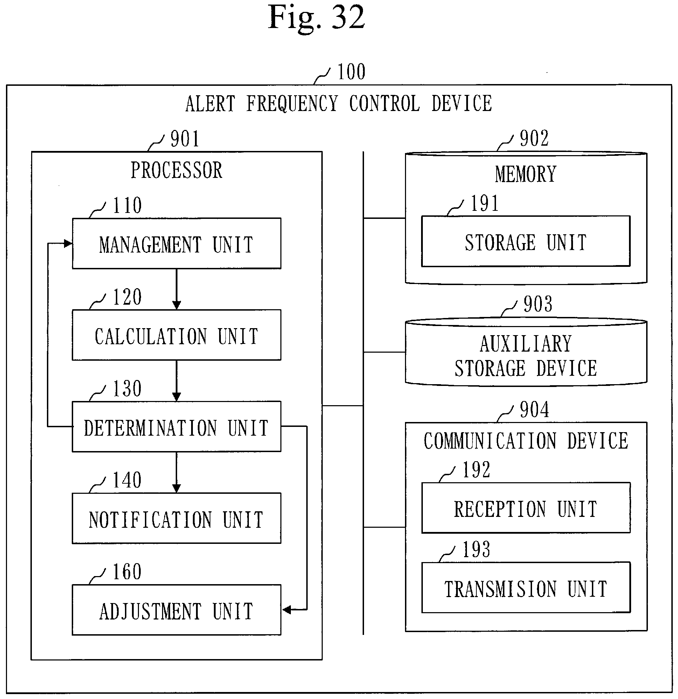

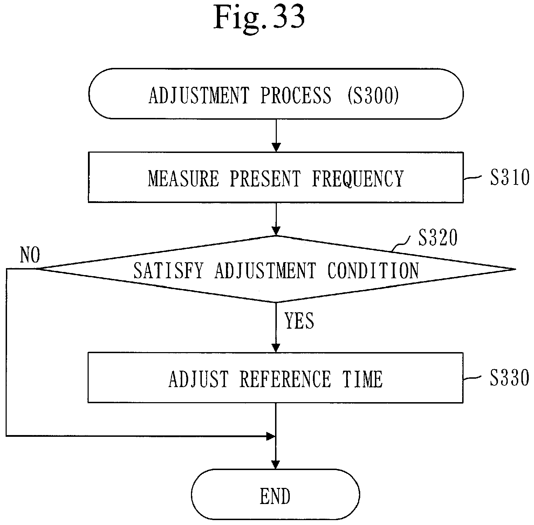

Regarding an embodiment in which reference time is adjusted, mainly different points from Embodiment 1 will be explained based on Fig. 32 and Fig. 33.

*** Description of Configuration ***

Based on Fig. 32, a configuration of an alert frequency control device 100 will be explained.

The alert frequency control device 100 further includes an adjustment unit 160.

The alert frequency control program further causes a computer to function as the adjustment unit 160.

*** Description of Operation ***

The adjustment unit 160 executes an adjustment process (S300) during a specified adjustment period. After the adjustment period expires, the adjustment unit 160 returns the alert frequency control device 100 to a state before execution of the adjustment process (S300).

For example, the adjustment unit 160 executes the adjustment process (S300) one hour before operation end time for each day when the alert frequency control device 100 is operated, and, at the operation end time, returns the alert frequency control device 100 to the state before the execution of the adjustment process (S300).

In the adjustment process (S300), the adjustment unit 160 adjusts the reference time.

Specifically, the adjustment unit 160 measures frequency at which it has been determined that the alert is necessary as present frequency, based on the reference time, and adjusts the reference time based on the present frequency.

Based on Fig. 33, a procedure of the adjustment process (S300) will be explained.

In step S310, the adjustment unit 160 measures the present frequency.

Specifically, the adjustment unit 160 counts the number of times of the alert from operation start time to adjustment time. The number of times of the alert is the number of times that it has been determined that the alert is necessary. Then, the adjustment unit 160 divides the number of times of the alert by a value obtained by dividing time period from the operation start time to the adjustment time by unit time. A value obtained as a result is the present frequency.

In step S320, the adjustment unit 160 determines whether the present frequency satisfies an adjustment condition.

The adjustment condition is a condition decided in advance as a condition on which the reference time is adjusted.

Specifically, the adjustment condition can be expressed in the following formula.

$$\lambda_N < \lambda_S$$

$\lambda_N$ is the present frequency.

$\lambda_S$ is reference frequency. The reference frequency is frequency decided in advance. Specifically, the reference frequency is alert frequency at which each alert can be dealt with at an operation center.

That is, the adjustment unit 160 determines whether the present frequency is smaller than the reference frequency.

If the present frequency is smaller than the reference frequency, the present frequency satisfies the adjustment condition.

If the present frequency satisfies the adjustment condition, the process proceeds to step S330.

If the present frequency does not satisfy the adjustment condition, the process ends. In this case, the reference time is not adjusted.

In step S330, the adjustment unit 160 adjusts the reference time.

Specifically, the adjustment unit 160 shortens the reference time.

For example, the adjustment unit 160 shortens the reference time by a certain time period per unit time, and calculates the present frequency per unit time. If the present frequency no longer satisfies the adjustment condition, the adjustment unit 160 sets the reference time back to an original value. Then, the adjustment unit 160 shortens the reference time by a certain time period per unit time again.

Specifically, the adjustment unit 160 shortens the reference time by one per minute, and calculates the present frequency per minute. If the present frequency no longer satisfies the adjustment condition, the adjustment unit 160 sets the reference time back to the original value.

For example, the adjustment unit 160 updates the reference frequency by calculating the following formula.

$$\lambda_S = \lambda_S + (\lambda_S - \lambda_N)$$

Next, the adjustment unit 160 calculates in advance, the reference time corresponding to a plurality of reference frequencies by applying the method of Embodiment 5.

Then, the adjustment unit 160 regards the reference time that does not exceed the updated reference frequency and also corresponds to the reference frequency closest to the updated reference frequency as reference time after adjustment.

*** Effect of Embodiment 6 ***

It is possible to automatically adjust reference time to such an extent that each alert can be dealt with.

As a result, it is possible reduce detection failure of a cyber-attack.

*** Other Configuration ***

In the adjustment process (S300) of Fig. 33, if the present frequency exceeds the reference frequency, the adjustment unit 160 may extend the reference time.

The alert frequency control device 100 may include a decision unit 150 as it does in Embodiment 5. That is, the reference time may be decided automatically by the decision unit 150 before operation.

*** Supplement to Embodiments ***

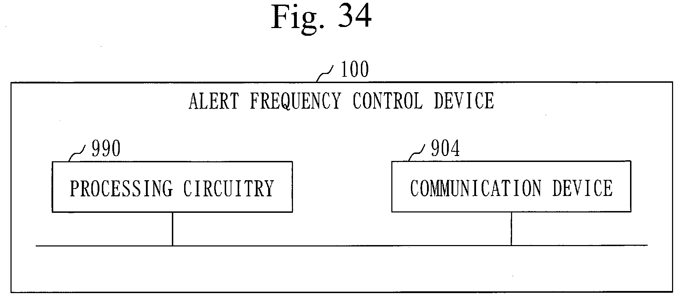

Based on Fig. 34, a hardware configuration of the alert frequency control device 100 will be explained.

The alert frequency control device 100 includes processing circuitry 990.

The processing circuitry 990 is hardware that realizes all or a part of the management unit 110, the calculation unit 120, the determination unit 130, the notification unit 140, the decision unit 150, and the adjustment unit 160.

The processing circuitry 990 may be hardware for exclusive use, or a processor 901 that executes a program stored in a memory 902.

If the processing circuitry 990 is the hardware for exclusive use, the processing circuitry 990 is, for example, a single circuit, a composite circuit, a programmed processor, a parallel-programmed processor, an ASIC, an FPGA, or a combination of these.

ASIC is an abbreviation of Application Specific Integrated Circuit, and FPGA is an abbreviation of Field Programmable Gate Array.

The alert frequency control device 100 may include a plurality of processing circuits in place of the processing circuitry 990. The plurality of processing circuits share the role of the processing circuitry 990.

In the alert frequency control device 100, it is acceptable that a part of its functions are realized by the hardware for exclusive use, and rest of the functions are realized by software or firmware.

Thus, the processing circuitry 990 can be realized by hardware, software, firmware, or a combination of these.

The embodiments are exemplifications of preferable embodiments, and are not intended to limit the technical scope of the present invention. The embodiments may be implemented partially or in combination with other embodiment. The procedures explained by using flowcharts and so forth may be modified as appropriate.

**Reference Signs List**

100: alert frequency control device, 110: management unit, 120: calculation unit, 130: determination unit, 140: notification unit, 150: decision unit, 160: adjustment unit, 191: storage unit, 192: reception unit, 193: transmission unit, 201: activity data, 202: activity registration data, 210: terminal file, 220: activity interval data, 230: attack activity list, 901: processor, 902: memory, 903: auxiliary storage device, 904: communication device, 990: processing circuitry.

**Claims**

1. An alert frequency control device comprising:

   a calculation unit, if an attack activity that belongs to any of a plurality of phases of a cyber-attack is detected, to calculate an occurrence interval regarding an attack scenario composed of a representative attack activity of each phase, using activity interval data including each occurrence interval of one or more attack activities for each phase; and
   a determination unit to determine whether or not an alert is necessary, based on the occurrence interval of the attack scenario.

2. The alert frequency control device according to claim 1,
   wherein the calculation unit selects a representative occurrence interval of each phase from the activity interval data, and calculates a sum of the selected representative occurrence intervals as the occurrence interval of the attack scenario.

3. The alert frequency control device according to claim 1,
   wherein the calculation unit obtains an occurrence interval corresponding to a detected attack activity from the activity interval data, selects from an activity registration file that includes a scenario interval corresponding to each attack activity for each phase, a representative scenario interval of a phase before the phase to which the detected attack activity belongs, and calculates a sum of the occurrence interval corresponding to the detected attack activity and the representative scenario interval as the occurrence interval of the attack scenario.

4. The alert frequency control device according to claim 3,
   wherein the calculation unit sets the occurrence interval of the attack scenario to the activity registration file, as a scenario interval corresponding to the detected attack activity.

5. The alert frequency control device according to claim 4,
   wherein the activity registration file includes a corresponding scenario that is information of the attack scenario corresponding to each attack activity for each phase, and
   wherein the calculation unit obtains from the activity registration file, a representative corresponding scenario of a phase before the phase to which the detected attack activity belongs, and sets the representative corresponding scenario and the detected attack activity to the activity registration file, as a corresponding scenario that corresponds to the detected attack activity.

6. The alert frequency control device according to any one of claims 1 to 5,
   wherein the determination unit determines that the alert is necessary if the occurrence interval of the attack scenario is longer than reference time.

7. The alert frequency control device according to claim 6,

   wherein the calculation unit compares the occurrence interval of the attack scenario with a provisional interval, updates the provisional interval to the occurrence interval of the attack scenario if the occurrence interval of the attack scenario is larger than the provisional interval, and determines that the alert is unnecessary if the occurrence interval of the attack scenario is larger than the provisional interval, and
   wherein the determination unit does not determine whether or not the alert is necessary, if it is determined that the alert is unnecessary.

8. The alert frequency control device according to claim 6 or claim 7 comprising,

a decision unit to decide the reference time,

wherein the calculation unit calculates each temporary occurrence interval of one or more attack scenarios before the reference time is decided,

wherein the determination unit determines that the alert is necessary if each temporary occurrence interval is longer than provisional time, and

wherein the decision unit measures, as estimated frequency, frequency at which it has been determined, before the reference time is decided, that the alert is necessary, and decides the reference time based on the estimated frequency.

9. The alert frequency control device according to claim 8,

wherein the decision unit decides the provisional time to be the reference time if the estimated frequency satisfies an update suspension condition, and updates the provisional time if the estimated frequency does not satisfy the update suspension condition,

wherein the calculation unit calculates one or more new temporary occurrence intervals after the provisional time is updated,

wherein the determination unit determines that the alert is necessary if each new temporary occurrence interval is longer than the provisional time after update, and

wherein the decision unit measures, as new estimated frequency, frequency at which it has been determined that the alert is necessary, after the provisional time is updated, and decides the provisional time after update to be the reference time if the new estimated frequency satisfies the update suspension condition.

10. The alert frequency control device according to any one of claims 6 to 9 comprising,

an adjustment unit to measure, as present frequency, frequency at which it has been determined that the alert is necessary, based on the reference time, and adjust the reference time if the present frequency satisfies an adjustment condition.

11. An alert frequency control program to cause a computer to execute:

a calculation process of, if an attack activity that belongs to any of a plurality of phases of a cyber-attack is detected, calculating an occurrence interval regarding an attack scenario composed of one attack activity of each phase, using activity interval data indicating each occurrence interval of one or more attack activities for each phase; and

a determination process of determining whether or not an alert is necessary, based on the occurrence interval of the attack scenario.

# Fig. 1

ALERT FREQUENCY CONTROL DEVICE — 100

PROCESSOR — 901

MANAGEMENT UNIT — 110

CALCULATION UNIT — 120

DETERMINATION UNIT — 130

NOTIFICATION UNIT — 140

MEMORY — 902

STORAGE UNIT — 191

AUXILIARY STORAGE DEVICE — 903

COMMUNICATION DEVICE — 904

RECEPTION UNIT — 192

TRANSMISSION UNIT — 193

# Fig. 2

RECEIVE INSTRUCTION → INSPECT TERMINAL → ACQUIRE ACCESS RIGHT TO SERVER

ATTACK SCENARIO (A)

ATTACK SCENARIO (B)

| FIRST PHASE | SECOND PHASE | THIRD PHASE |
|---|---|---|
| ATTACK ACTIVITY 1-1 | ATTACK ACTIVITY 2-1 | ATTACK ACTIVITY 3-1 |
| ATTACK ACTIVITY 1-2 | ATTACK ACTIVITY 2-2 | ATTACK ACTIVITY 3-2 |
| ATTACK ACTIVITY 1-3 | | ATTACK ACTIVITY 3-3 |

ATTACK SCENARIO (C)

CYBER ATTACK

EP 3 657 372 A1

# Fig. 3

```
┌──────────────────────────────────────────┐
│      ALERT FREQUENCY CONTROL METHOD       │
└──────────────────────────────────────────┘
                     │
   ┌─────────────────▼──────────────────┐
   │        RECEIVE ACTIVITY DATA        │──── S110
   └─────────────────┬──────────────────┘
                     │
   ┌─────────────────▼──────────────────┐
   │      CALCULATE SCENARIO INTERVAL    │──── S120
   └─────────────────┬──────────────────┘
                     │
   ┌─────────────────▼──────────────────┐
   │         DETERMINE WHETHER           │──── S130
   │      OR NOT ALERT IS NECESSARY      │
   └─────────────────┬──────────────────┘
                     │
   ┌─────────────────▼──────────────────┐
   │     PERFORM PROCESSING ACCORDING    │──── S140
   │       TO DETERMINATION RESULT       │
   └─────────────────────────────────────┘
```

# Fig. 4

```
        ┌─────────────────────────────┐
        │   RECEIPT PROCESS (S110)     │
        └─────────────────────────────┘
                      │
                      ▼
        ┌─────────────────────────────┐
        │    RECEIVE ACTIVITY DATA     │──── S111
        └─────────────────────────────┘
                      │
                      ▼
                  ╱───────────╲  S112
                 ╱             ╲          NO
        ────────  TERMINAL FILE EXIST ──────────────┐
                 ╲             ╱                     │
                  ╲───────────╱                      │
                      │ YES                          │
                      ▼  S113                         ▼  S114
        ┌─────────────────────────────┐  ┌─────────────────────────────┐
        │     SELECT TERMINAL FILE     │  │    GENERATE TERMINAL FILE    │
        └─────────────────────────────┘  └─────────────────────────────┘
                      │                               │
                      │◄──────────────────────────────┘
                      ▼
                  ┌─────────┐
                  │   END   │
                  └─────────┘
```

# Fig. 5

201: ACTIVITY DATA

ACTIVITY NAME
  EXECUTION OF SCHEDULED TASK

TERMINAL OF OCCURRENCE
  TERMINAL A

TIME OF OCCURRENCE
  2017/05/23 12:34

.
.
.

# Fig. 6

210: TERMINAL FILE (ACTIVITY REGISTRATION FILE)

| FIRST PHASE | SECOND PHASE | |
|:---:|:---:|:---:|
| $E_{11}$ | $E_{21}$ | . . . |
| | $E_{22}$ | |
| | . . . | |

# Fig. 7

202: ACTIVITY REGISTRATION DATA

<u>ACTIVITY NAME</u>
  EXECUTION OF SCHEDULED TASK

<u>TERMINAL OF OCCURENCE</u>
  TERMINAL A

# Fig. 8

220: ACTIVITY INTERVAL DATA

| TERMINAL | FIRST PHASE | | | SECOND PHASE | | | ··· |
|---|---|---|---|---|---|---|---|
| | $E_{11}$ | $E_{12}$ | ··· | $E_{21}$ | $E_{22}$ | ··· | ··· |
| TERMINAL A | 72 min. | 65 min. | ··· | 96 min. | 110 min. | ··· | ··· |
| TERMINAL b | 58 min. | 48 min. | ··· | 120 min. | 144 min. | ··· | ··· |
| : | : | : | ··· | : | : | ··· | ··· |

# Fig. 9

```
CALCULATION PROCESS (S120)
```

DETERMINE PHASE OF DETECTED ACTIVITY — S121

REGISTER ACTIVITY REGISTRATION DATA — S122

UPDATE ACTIVITY INTERVAL DATA — S123

CALCULATE SCENARIO INTERVAL — S124

```
END
```

# Fig.10

230: ATTACK ACTIVITY LIST

| ACTIVITY NAME | PHASE NUMBER |
|---|---|
| ATTACK ACTIVITY $E_{11}$ | 1 |
| ATTACK ACTIVITY $E_{12}$ | 1 |
| : | : |
| ATTACK ACTIVITY $E_{21}$ | 2 |
| ATTACK ACTIVITY $E_{22}$ | 2 |
| : | : |

# Fig.11

REGISTRATION PROCESS (S122)

SELECT ACTIVITY REGISTRATION DATA GROUP OF TARGET PHASE — S1221

ACTIVITY REGISTRATION DATA OF TARGET ACTIVITY IS INCLUDED — S1222

YES

NO

REGISTER ACTIVITY REGISTRATION DATA OF TARGET ACTIVITY — S1223

END

# Fig.12

```
        ┌─────────────────────────────────┐
        │      UPDATE PROCESS (S123)       │
        └─────────────────────────────────┘
                        │
                        ▼
                    ╱       ╲                    S1231
         YES    ╱   TARGET      ╲
      ◄────  INFORMATION IS REGISTERED IN ACTIVITY
              ╲      INTERVAL DATA      ╱
                    ╲       ╱
                       │ NO
                       ▼
        ┌─────────────────────────────────┐
        │    REGISTER TARGET INFORMATION   │── S1232
        │    IN ACTIVITY INTERVAL DATA     │
        └─────────────────────────────────┘
                        │
                        ▼
        ┌─────────────────────────────────┐
        │      UPDATE ACTIVITY INTERVAL    │── S1233
        └─────────────────────────────────┘
                        │
                        ▼
        ┌─────────────────────────────────┐
        │    UPDATE THE NUMBER OF TIMES    │── S1234
        │          OF OCCURRENCE           │
        └─────────────────────────────────┘
                        │
                        ▼
        ┌─────────────────────────────────┐
        │  UPDATE TIME OF LAST OCCURRENCE  │── S1235
        └─────────────────────────────────┘
                        │
                        ▼
        ┌─────────────────────────────────┐
        │               END                │
        └─────────────────────────────────┘
```

# Fig. 13

```
┌─────────────────────────────────────────────────┐
│  SCENARIO INTERVAL CALCULATION PROCESS  (S124)  │
└─────────────────────────────────────────────────┘
                        │
                        ▼
        ┌───────────────────────────────┐
        │   n = MAXIMUM PHASE NUMBER     │──── S1241
        └───────────────────────────────┘
                        │
                        ▼
        ┌───────────────────────────────┐
        │  SELECT REPRESENTATIVE ACTIVITY │──── S1242
        │   INTERVAL OF n-th PHASE        │
        └───────────────────────────────┘
```

S1245

ACTIVITY INTERVAL OF n-th PHASE IS REGISTERED

YES

NO

n = n − 1 —— S1243

S1244

n >= 1

YES

NO

CALCULATE SUM OF SELECTED ACTIVITY INTERVAL —— S1246

END

# Fig. 14

DETERMINATION PROCESS (S130)

S131

SCENARIO INTERVAL
>= REFERENCE TIME

NO

YES

S132

ALERT IS NECESSARY

S133

ALERT IS UNNECESSARY

END

# Fig. 15

```
DETERMINATION RESULT PROCESS (S140)

                        │
                        ▼
  NO        ◇ ALERT IS NECESSARY ◇
◄───────────
            │
            │ YES
            ▼                    S141
  ┌─────────────────────────┐
  │      NOTIFY ALERT       │
  └─────────────────────────┘
            │
            ▼                    S142
  ┌─────────────────────────┐
  │   DELETE TERMINAL FILE  │
  └─────────────────────────┘
            │
            ▼
          END
```

# Fig. 16

202: ACTIVITY REGISTRATION DATA

<u>ACTIVITY NAME</u>
  EXECUTION OF SCHEDULED TASK

<u>TERMINAL OF OCCURRENCE</u>
  TERMINAL A

<u>SCENARIO INTERVAL</u>
  ...

# Fig. 17

SCENARIO INTERVAL CALCULATION PROCESS (S124)

n = TARGET PHASE NUMBER — S1241

OBTAIN ACTIVITY INTERVAL
CORRESPONDING TO DETECTED ACTIVITY — S1242

( 1 )

n = n - 1 — S1243

S1244

n >= 1

NO → 

YES

S1245

ACTIVITY
REGISTRATION DATA GROUP
OF n-th PHASE IS
REGISTERED

NO → ( 1 )

YES

S1248

SET SCENARIO INTERVAL TO
ACTIVITY REGISTRATION DATA
CORRESPONDONG TO DETECTED ACTIVITY

SELECT REPRESENTATIVE SCENARIO
INTERVAL OF n-th PHASE — S1246

SET SCENARIO INTERVAL TO
ACTIVITY REGISTRATION DATA
CORRESPONDING TO DETECTED ACTIVITY — S1247

END

# Fig. 18

210:TERMINAL FILE (ACTIVITY REGISTRATION FILE)

| FIRST PHASE | SECOND PHASE | THIRD PHASE |
|---|---|---|

ACTIVITY INTERVAL
CORRESPONDING TO
DETECTED ACTIVITY

72    $E_{11}$

168    $E_{21}$

182    $E_{22}$

300    $E_{31}$

118

EP 3 657 372 A1

# Fig. 19

202: ACTIVITY REGISTRATION DATA

<u>ACTIVITY NAME</u>
  EXECUTION OF SCHEDULED TASK

<u>TERMINAL OF OCCURRENCE</u>
  TERMINAL A

<u>SCENARIO INTERVAL</u>
    ...

<u>TIME OF OCCURRENCE LIST</u>

| 2017/05/23 12:34 |
| 2017/05/23 22:16 |
| ... |

<u>CORRESPONDING SCENARIO</u>

| PHASE 1 | $E_{11}$ |
| PHASE 2 | $E_{21}$ |
| ... | ... |

# Fig. 20

```
       ┌─────────────────────────────────────────┐
       │     REGISTRATION PROCESS (S122)          │
       └─────────────────────────────────────────┘
                          │
                          ▼
       ┌─────────────────────────────────────────┐
       │  SELECT ACTIVITY REGISTRATION DATA GROUP │ ─ S1221
       │          OF TARGET PHASE                 │
       └─────────────────────────────────────────┘
                          │
                          ▼
                     ACTIVITY                    ╱ S1222
              REGISTRATION DATA
   YES      OF TARGET ACTIVITY IS
                   INCLUDED
                          │ NO
                          ▼
       ┌─────────────────────────────────────────┐
       │  REGISTER ACTIVITY REGISTRATION DATA     │ ─ S1223
       │          OF TARGET ACTIVITY              │
       └─────────────────────────────────────────┘
                          │
                          ▼
       ┌─────────────────────────────────────────┐
       │  ADD TIME OF OCCURRENCE OF DETECTED      │
       │ ACTIVITY TO ACTIVITY REGISTRATION DATA   │ ─ S1224
       │          OF TARGET ACTIVITY              │
       └─────────────────────────────────────────┘
                          │
                          ▼
                   ┌─────────────┐
                   │     END     │
                   └─────────────┘
```

# Fig. 21

SCENARIO INTERVAL CALCULATION PROCESS (S124)

n = TARGET PHASE NUMBER — S1241

OBTAIN ACTIVITY INTERVAL
CORRESPNDING TO DETECTED ACTIVITY — S1242

1

n = n - 1 — S1243

S1244
n >= 1

NO

YES

S1245
ACTIVITY
REGISTRATION DATA GROUP
OF n-th PHASE IS
REGISTERED

NO 1

S1248
UPDATE ACTIVITY REGISTRATION DATA
CORRESPONDING TO DETECTED ACTIVITY

YES

SELECT REPRESENTATIVE SCENARIO
INTERVAL OF n-th PHASE — S1246

UPDATE ACTIVITY REGISTRATION DATA
CORRESPONDING TO DETECTED ACTIVITY — S1247

END

# Fig. 22

210: TERMINAL FILE (ACTIVITY REGISTRATION FILE)

PROVISIONAL INTERVAL : 182 min.

| FIRST PHASE | SECOND PHASE | |
|---|---|---|
| $E_{11}$ | $E_{21}$ | |
| | $E_{22}$ | · · · |

# Fig. 23

```
┌─────────────────────────────────────┐
│ ALERT FREQUENCY CONTROL METHOD )
└─────────────────────────────────────┘
```

RECEIVE ACTIVITY DATA — S110

CALCULATE SCENARIO INTERVAL — S120

ALERT IS UNNECESSARY

YES

NO

DETERMINE WHETHER OR NOT ALERT IS NECESSARY — S130

PERFORM PROCESSING ACCORDING TO DETERMINATION RESULT — S140

## Fig. 24

```
┌─────────────────────────────────────────────┐
│  SCENARIO INTERVAL CALCULATION PROCESS (S124) │
└─────────────────────────────────────────────┘
                      │
                      ▼
        ┌─────────────────────────────┐
        │   n = TARGET PHASE NUMBER   │── S1241
        └─────────────────────────────┘
                      │
                      ▼
        ┌─────────────────────────────┐
        │    OBTAIN ACTIVITY INTERVAL │── S1242
        │ CORRESPONDING TO DETECTED ACTIVITY │
        └─────────────────────────────┘
    ┌───┐                 │
    │ 1 │─────────────────▶
    └───┘                 │
                      ▼
        ┌─────────────────────────────┐
        │          n = n - 1          │── S1243
        └─────────────────────────────┘
                      │
                      ▼
   NO            ╱  S1244  ╲
◀───────────────   n >= 1
                ╲          ╱
                      │ YES
                      ▼
                 ╱  S1245  ╲
                  ACTIVITY
              REGISTRATION DATA GROUP    NO   ┌───┐
                OF n-th PHASE IS       ──────▶│ 1 │
                  REGISTERED                  └───┘
                ╲          ╱
                      │ YES
  ╱ S1248              │
┌─────────────────────────────┐       ▼
│ UPDATE ACTIVITY REGISTRATION DATA │   ┌─────────────────────────────┐
│ CORRESPONDING TO DETECTED ACTIVITY│   │   SELECT REPRESENTATIVE      │── S1246
└─────────────────────────────┘       │ SCENARIO INTERVAL OF n-th PHASE │
                                       └─────────────────────────────┘
                                                │
                                                ▼
                                       ┌─────────────────────────────┐
                                       │ UPDATE ACTIVITY REGISTRATION DATA │── S1247
                                       │ CORRESPONDING TO DETECTED ACTIVITY │
                                       └─────────────────────────────┘
                                                │
                                                ▼
                                       ┌─────────────────────────────┐
                                       │  UPDATE PROVISIONAL INTERVAL  │── S1249
                                       │  CORRESPONDING TO TERMINAL    │
                                       │     OF OCCURRENCE             │
                                       └─────────────────────────────┘
                                                │
                                                ▼
                                            ┌───────┐
                                            │  END  │
                                            └───────┘
```

# Fig. 25

PROVISIONAL INTERVAL UPDATE PROCESS (S1249)

S12491

NO ← SCENARIO INTERVAL > PROVISIONAL INTERVAL

YES

S12493

ALERT IS UNNECESSARY

S12492

UPDATE PROVISIONAL INTERVAL CORRESPONDING TO TERMINAL OF OCCURRENCE

END

# Fig. 26

# Fig. 27

```
        ┌─────────────────────────────────────┐
        │   ALERT FREQUENCY CONTROL METHOD    │
        └─────────────────────────────────────┘
                          │
                          ▼
        ┌─────────────────────────────────────┐
        │        DECIDE REFERENCE TIME        │──── S200
        └─────────────────────────────────────┘
                          │
          ┌───────────────┤
          │               ▼
          │   ┌─────────────────────────────────┐
          │   │        RECEIVE ACTIVITY DATA    │──── S110
          │   └─────────────────────────────────┘
          │               │
          │               ▼
          │   ┌─────────────────────────────────┐
          │   │     CALCULATE SCENARIO INTERVAL │──── S120
          │   └─────────────────────────────────┘
          │               │
          │               ▼
          │   ┌─────────────────────────────────┐
          │   │      DETERMINE WHETHER OR       │──── S130
          │   │     NOT ALERT IS NECESSARY      │
          │   └─────────────────────────────────┘
          │               │
          │               ▼
          │   ┌─────────────────────────────────┐
          │   │   PERFORM PROCESSING ACCORDING  │──── S140
          └───│    TO DETERMINATION RESULT      │
              └─────────────────────────────────┘
```

## Fig.28

```
         ┌──────────────────────────────────┐
         │    DECISION  PROCESS  (S200)      │
         └──────────────────────────────────┘
                          │
                          ▼
         ┌──────────────────────────────────┐
         │  INITIALIZE  PROVISIONAL  TIME,   │─ S210
         │  FIRST  TIME  AND  SECOND  TIME   │
         └──────────────────────────────────┘
                          │
          ┌──────────────►│
          │               ▼
          │    ┌──────────────────────────────────┐
          │    │  MEASURE  ESTIMATED  FREQUENCY    │─ S220
          │    └──────────────────────────────────┘
  S240    │                │
┌─────────────────────────┐│
│ UPDATE PROVISIONAL TIME  ││
└─────────────────────────┘│
          ▲                ▼
          │         ╱──────────────────╲   S230
          │   NO   ╱      SATISFY        ╲
          └───────◄  UPDATE SUSPENSION    ►
                   ╲     CONDITION        ╱
                    ╲──────────────────╱
                          │ YES
                          ▼
                 ┌──────────────┐
                 │     END      │
                 └──────────────┘
```

# Fig. 29

# Fig.30

# Fig. 31

```
                    ( 1 )
                      │
                      ▼
        ┌──────────────────────────┐
        │   UPDATE SECOND TIME     │ ── S246
        │   TO PROVISIONAL TIME    │
        └──────────────────────────┘
                      │
                      ▼
                                    S247
                 ◇─────────────────────◇            NO
        ◇─────────────────────────────────────◇ ──────────┐
         ◇   FIRST TIME = INITIAL VALUE    ◇              │
                 ◇─────────────────────◇                  │
                      │ YES                               │
                      ▼                                    ▼
        ┌──────────────────────────┐        ┌──────────────────────────┐
        │  UPDATE PROVISIONAL TIME │        │  UPDATE PROVISIONAL TIME  │ ── S249
        │   TO HALF THE TIME       │ ─ S248 │   TO INTERMEDIATE TIME    │
        └──────────────────────────┘        │   BETWEEN FIRST TIME      │
                      │                      │   AND PROVISIONAL TIME    │
                      │                      └──────────────────────────┘
                      │                                    │
                      ◄────────────────────────────────────┘
                      ▼
                ┌──────────┐
                │   END    │
                └──────────┘
```

# Fig. 32

100

ALERT FREQUENCY CONTROL DEVICE

901

PROCESSOR

110

MANAGEMENT UNIT

120

CALCULATION UNIT

130

DETERMINATION UNIT

140

NOTIFICATION UNIT

160

ADJUSTMENT UNIT

902

MEMORY

191

STORAGE UNIT

903

AUXILIARY
STORAGE DEVICE

904

COMMUNICATION DEVICE

192

RECEPTION UNIT

193

TRANSMISION UNIT

# Fig. 33

```
┌─────────────────────────────────┐
│   ADJUSTMENT PROCESS (S300)      │
└─────────────────────────────────┘
                │
                ▼
┌─────────────────────────────────┐
│   MEASURE PRESENT FREQUENCY      │──── S310
└─────────────────────────────────┘
                │
                ▼
NO        ╱─────────────────╲     ╱ S320
    ◄────  SATISFY ADJUSTMENT CONDITION
          ╲─────────────────╱
                │ YES
                ▼
┌─────────────────────────────────┐
│     ADJUST REFERENCE TIME        │──── S330
└─────────────────────────────────┘
                │
                ▼
           ╭─────────╮
           │   END   │
           ╰─────────╯
```

# Fig. 34

/ 100

ALERT FREQUENCY CONTROL DEVICE

/ 990

PROCESSING CIRCUITRY

/ 904

COMMUNICATION DEVICE

<div align="center">

**INTERNATIONAL SEARCH REPORT**

</div>

| International application No. |
| --- |
| PCT/JP2017/034167 |

**A. CLASSIFICATION OF SUBJECT MATTER**
Int. Cl. G06F21/55(2013.01)i

According to International Patent Classification (IPC) or to both national classification and IPC

**B. FIELDS SEARCHED**

Minimum documentation searched (classification system followed by classification symbols)
Int. Cl. G06F21/55

Documentation searched other than minimum documentation to the extent that such documents are included in the fields searched
Published examined utility model applications of Japan      1922-1996
Published unexamined utility model applications of Japan    1971-2017
Registered utility model specifications of Japan            1996-2017
Published registered utility model applications of Japan    1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2014/045827 A1 (MITSUBISHI ELECTRIC CORP.) 27 March 2014, claim 1 & US 2015/0205956 A1, claim 1 & EP 2899665 A1 & CN 104620252 A | 1-11 |
| A | WO 2015/128896 A1 (MITSUBISHI ELECTRIC CORP.) 03 September 2015, claim 1 & US 2016/0378980 A1, claim 1 & EP 3113061 A1 & CN 106062765 A | 1-11 |
| A | JP 2005-236862 A (KDDI CORP.) 02 September 2005, claim 1 (Family: none) | 1-11 |

☐ Further documents are listed in the continuation of Box C.     ☐ See patent family annex.

| | |
| --- | --- |
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>29.11.2017 | Date of mailing of the international search report<br>12.12.2017 |
| --- | --- |
| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**EP 3 657 372 A1**

## REFERENCES CITED IN THE DESCRIPTION

### Patent documents cited in the description

- JP 2015121968 A